# EUROPEAN PATENT SPECIFICATION

(11) **EP 4 200 649 B1**
(45) Date of publication and mention of the grant of the patent: **10.12.2025**
(21) Application number: 20757901.2
(22) Date of filing: 18.08.2020
(51) Int. Cl.: G01T 1/172, G01T 1/24, G01T 1/29, G01V 5/00

(54) **SYSTEMS FOR COINCIDENCE DETECTION IN X-RAY DETECTORS**
SYSTEME ZUR KOINZIDENZDETEKTION MIT RÖNTGENSTRAHLENDETEKTOREN
SYSTÈMES DE DETECTION EN COINCIDENCE POUR DES DETECTEURS DE RAYONS X.

(43) Date of publication of application: 28.06.2023
(73) Proprietor: GE Precision Healthcare LLC, Waukesha, Wisconsin 53188-1615 (US)
(72) Inventor: SUNDBERG, Christel, Stockholm (SE); BERGENTOFT, Filip, 112 41 Stockholm (SE); PERSSON, Mats, 137 36 Västerhaninge (SE); DANIELSSON, Mats, 187 44 Täby (SE)
(74) Representative: AWA Sweden AB
(86) International application number: PCT/EP2020/073116
(87) International publication number: WO 2022/037763

(56) References cited:
- US-A1- 2020 158 663
- US-A1- 2020 367 839
- US-B2- 10 520 611
- US-B2- 8 063 379
- US-B2- 8 354 651
- ZALUZEC N J: "Detector solid angle formulas for use in x-ray energy dispersive spectrometry", MICROSCOPY AND MICROANALYSIS,, vol. 15, no. 2, 1 April 2009 (2009-04-01), pages 93 - 98, XP001520426, ISSN: 1431-9276, DOI: 10.1017/S1431927609090217

## Description

### TECHNICAL FIELD

The proposed technology relates to x-ray imaging and x-ray detectors, and more particularly to photon-counting x-ray detectors and x-ray detector systems and coincidence detection systems, as well as corresponding methods and systems as well as x-ray imaging systems, computer programs and computer-program products.

### BACKGROUND

Radiographic imaging such as x-ray imaging has been used for years in medical applications and for non-destructive testing.

Normally, an x-ray imaging system includes an x-ray source and an x-ray detector system. The x-ray source emits x-rays, which pass through a subject or object to be imaged and are then registered by the x-ray detector system. Since some materials absorb a larger fraction of the x-rays than others, an image is formed of the subject or object.

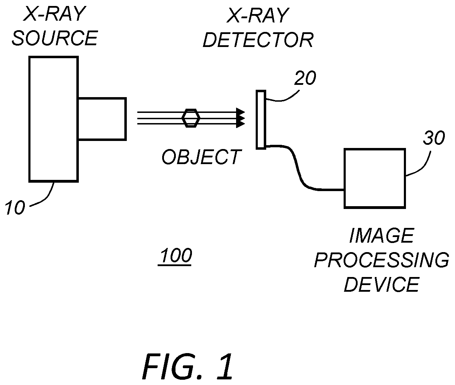

It may be useful to begin with a brief overview of an illustrative overall x-ray imaging system, with reference to FIG. 1. In this non-limiting example, the x-ray imaging system 100 basically comprises an x-ray source 10, an x-ray detector 20 or x-ray detector system and an associated image processing device 30. In general, the x-ray detector 20 is configured for registering radiation from the x-ray source 10 that may have been focused by optional x-ray optics and passed an object or subject or part thereof. The x-ray detector 20 is connectable to the image processing device 30 via suitable analog processing and read-out electronics (which may be integrated in the x-ray detector 20) to enable image processing and/or image reconstruction by the image processing device 30.

US8063379 discloses using different detectors and specifies combining information from track detectors, position sensitive detectors and photodetector digital cameras. Time coincidence circuits allow to correlate separate tracks from the track detectors and signals from the position sensitive detectors. The document further shows coincidence circuits with two directional cameras, one for photoelectric effect detection and the other for Compton events. An embodiment allows for the position and energy spectrum of source to be known and used so that other parameters may be determined for diagnostic purposes.

US10520611 discloses edge-type Si-detectors which can be used for CT-imaging, for PET, for SPECT, for Compton imaging or for any combination thereof.

There is a general demand for improvements with regard to the performance of x-ray imaging systems and x-ray detector systems.

By way of example, it may be desirable to improve the signal-to-noise ratio and spectral performance of a photon-counting x-ray detector.

For example, it may also be desirable to be able to obtain and/or determine useful information about the radiation incident on the x-ray detector.

### SUMMARY

It is an object to provide an improved x-ray detector system

This and other objects may be achieved by one or more embodiments of the proposed technology.

According to a first aspect, there is provided an x-ray detector system according to claim 1.

According to a second aspect, not encompassed by the appended claims, there is provided an x-ray imaging system comprising such an x-ray detector system.

According to a third aspect, not encompassed by the appended claims, there is provided a method for obtaining or determining information about the radiation incident on the x-ray detector. The method comprises the steps of:
- using a photon-counting x-ray detector for detecting x-ray radiation, where said photon-counting x-ray detector is configured for operation with a broad-energy x-ray spectrum with a maximum energy of less than 160 keV, emitted from a localized x-ray source;
- registering timing information of photon interactions in said photon-counting x-ray detector; and
- obtaining or determining information about the radiation incident on the x-ray detector, including a representation of at least one of the number of incident photons in a particular area, the spatial distribution of incident photons, and the energy distribution of incident photons, based on said timing information and information about the location of the x-ray source in relation to the x-ray detector.

According to a fourth aspect, not encompassed by the appended claims, there is provided a coincidence detection system configured to be operated with a photon-counting x-ray detector. The coincidence detection system is configured to determine and/or obtain information about the radiation incident on the x-ray detector based on information about the time of photon interactions in said x-ray detector and information about the location of an x-ray source in relation to the x-ray detector.

In this way, there is provided useful improvements with regard to x-ray imaging and/or detector technology.

By way of example, the signal-to-noise ratio and spectral performance of a photon-counting x-ray detector may be significantly improved.

### BRIEF DESCRIPTION OF DRAWINGS

The embodiments, together with further objects and advantages thereof, may best be understood by making reference to the following description taken together with the accompanying drawings, in which:
FIG. 1 is a schematic diagram illustrating an example of an overall x-ray imaging system.
FIG. 2A is a schematic diagram illustrating another example of an x-ray imaging system.
FIG. 2B is a schematic diagram illustrating an example of an x-ray detector system according to the proposed technology.
FIG. 2C is a schematic diagram illustrating an example of a particular, non-limiting embodiment in which the coincidence detection system is implemented in the digital processing circuitry.
FIG. 3 is a schematic diagram illustrating examples of the energy spectrum for three different x-ray tube voltages.
FIG. 4 is a schematic diagram illustrating an example of the conceptual structure for implementing an energy-discriminating photon-counting detector.
FIG. 5 is a schematic diagram of an x-ray detector according to an exemplary embodiment.
FIG. 6 is a schematic diagram illustrating an example of a semiconductor detector module according to an exemplary embodiment.
FIG. 7 is a schematic diagram illustrating another example of an x-ray detector sub-module according to an exemplary embodiment.
FIG. 8 is a schematic diagram illustrating an example of a modular x-ray detector comprising a number of detector sub-modules arranged side-by-side, e.g. in a slightly curved overall geometry with respect to an x-ray source located at an x-ray focal point.
FIG. 9 is a schematic diagram illustrating an example of a modular x-ray detector comprising a number of detector sub-modules arranged side-by-side, and also stacked one after the other.
FIG. 10 is a schematic diagram illustrating an example of a photon-counting x-ray detector, which is based on a number of x-ray detector sub-modules 21, here referred to as wafers.
FIG. 11 is a schematic diagram illustrating the Compton effect.
FIG. 12 is a schematic diagram illustrating an example of a spectrum of deposited energies for the Compton and photoelectric parts of the interacting spectrum.
FIG. 13 is a schematic diagram illustrating an example of interactions during a time interval. The black lines show interactions that belong to the same incident photon.
FIG. 14 is a schematic diagram illustrating an example of the 1D scatter distance for the interaction chain 1 Compton + 1 photoelectric.
FIG. 15 is a schematic diagram illustrating an example of the spectrum of incident photon energies for different chains of interactions.
FIG. 16 is a schematic diagram illustrating an example of pixels of a particular wafer in the x-z plane.
FIG. 17 is a schematic diagram illustrating an example of a charge cloud profile in the x-direction for a charge cloud.
FIG. 18 is a schematic diagram illustrating an example of a charge cloud profile in the z-direction for a charge cloud.

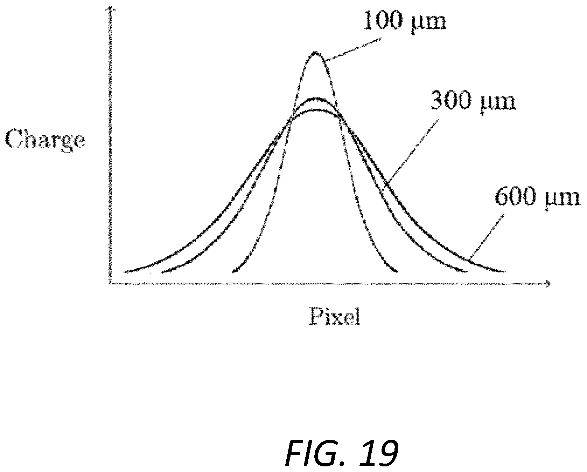

FIG. 19 is a schematic diagram illustrating an example of how the width of the charge diffusion or cloud is dependent on the distance, along the thickness of the considered detector sub-module or wafer of an x-ray detector, from the initial point of interaction to the point of detection.
FIG. 20 is a schematic diagram illustrating an example of an x-ray detector sub-module according to an embodiment.
FIG. 21 is a schematic diagram illustrating another example of an x-ray detector sub-module according to an embodiment.
FIG. 22 is a schematic diagram illustrating an example of an active integrated pixel according to an embodiment.
FIG. 23 is a schematic diagram illustrating another example of an active integrated pixel according to another embodiment.
FIG. 24 is a schematic diagram illustrating yet another example of an active integrated pixel according to a further embodiment.
FIG. 25 is a schematic diagram illustrating still another example of an active integrated pixel according to yet another embodiment.
FIG. 26 is a schematic diagram illustrating an example of a computer implementation according to an embodiment, not encompassed by the appended claims.
FIG. 27 is a schematic flow diagram illustrating an example of a method for obtaining or determining information about the radiation incident on the x-ray detector, not encompassed by the appended claims.

### DETAILED DESCRIPTION

For a better understanding, it may be useful to continue with an introductory description of non-limiting examples of an overall x-ray imaging system.

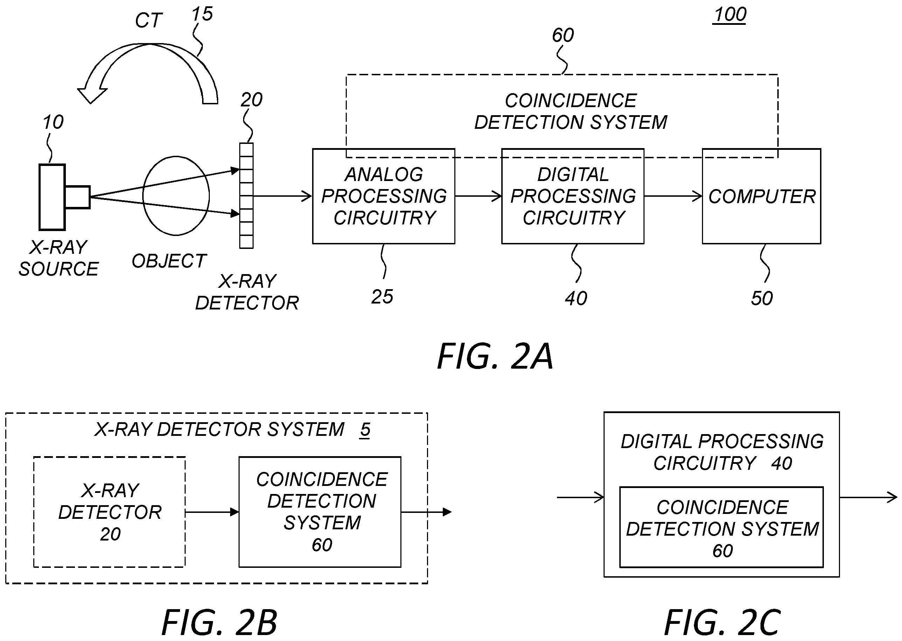

FIG. 2A is a schematic diagram illustrating an example of an x-ray imaging system 100 comprises an x-ray source 10, which emits x-rays; an x-ray detector 20, which detects the x-rays after they have passed through the object; analog processing circuitry 25, which processes the raw electrical signal from the detector and digitizes it; digital processing circuitry 40 which may carry out further processing operations on the measured data such as applying corrections, storing it temporarily, or filtering; and a computer 50 which stores the processed data and may perform further post-processing and/or image reconstruction.

The overall detector may be regarded as the x-ray detector system 20, or the x-ray detector system 20 combined with the associated analog processing circuitry 25.

The digital part including the digital processing circuitry 40 and/or the computer 50 of FIG. 2 may be regarded as the digital image processing system 30 of FIG. 1, which performs image reconstruction based on the image data from the x-ray detector. The image processing system 30 of FIG. 1 may thus be seen as the computer 50 of FIG. 2, or alternatively the combined system of the digital processing circuitry 40 and the computer 50, or possibly the digital processing circuitry 40 by itself if the digital processing circuitry is further specialized also for image processing and/or reconstruction.

An example of a commonly used x-ray imaging system is a Computed Tomography (CT) system, which may include an x-ray source that produces a fan or cone beam of x-rays and an opposing x-ray detector system for registering the fraction of x-rays that are transmitted through a patient or object. The x-ray source and detector system are normally mounted in a gantry that rotates around the imaged object.

Accordingly, the x-ray source 10 and the x-ray detector 20 illustrated in FIG. 1 and FIG. 2 may thus be arranged as part of a CT system, e.g. mountable in a CT gantry.

The x-ray imaging system 100 may also include a coincidence detection system 60 for implementation of the proposed technology. With reference to FIG. 2A, the coincidence detection system 60 may, by way of example, be implemented at least partly in the digital processing circuitry 40 and/or at least partly in the analog processing circuitry 25 and/or at least partly as executable program code for execution by the computer 50.

FIG. 2B is a schematic diagram illustrating an example of an x-ray detector system according to the proposed technology. The x-ray detector system 5 comprises an x-ray detector 20 and a coincidence detection system 60.

FIG. 2C is a schematic diagram illustrating an example of a particular, non-limiting embodiment in which the coincidence detection system 60 is implemented in the digital processing circuitry 40.

According to an aspect, there is thus provided an improved x-ray detector system 5 according to claim 1.

By way of example, such a detector system can be incorporated in an imaging system including a detector system, an x-ray source and a computer for data processing.

By way of example, the x-ray detector system may be configured for operation with a broad energy x-ray spectrum with a maximum energy of less than 160 keV, said x-ray spectrum being emitted by the x-ray source, which is a localized x-ray source of an extent smaller than 0.5 millisteradians as viewed from a point on the x-ray detector. This non-limiting example agrees with typical operating conditions in medical x-ray or CT system. It is also typical for such a system to be operated with an even smaller source, providing better localization of the incoming direction of radiation.

The coincidence detection system is configured to determine said information about the radiation incident on the x-ray detector including at least one of the number of incident photons in a particular area, the spatial distribution of incident photons, and the energy distribution of incident photons, based on said information about the time of photon interactions and said information about the location of the x-ray source in relation to the x-ray detector.

As an example, the coincidence detection system may be configured for operation based on a photon scattering model by combining said photon scattering model with said information about the location of the x-ray source in relation to the x-ray detector to determine and/or obtain said information about the radiation. In a non-limiting example, said information about the location of the x-ray source may be used together with measurements of interaction positions to measure the scattering angle of the incident radiation, and said photon scattering model may be used to estimate the likelihood that said scattering angle is observed together with one or more of the registered photon energies.

The inventors have appreciated that having a localized source, for example an x-ray tube, allows constructing an improved coincidence detection system. By way of example, if the incident direction of radiation is known with high precision, such as if the x-ray source is localized to a point of approximate size 1 mm or more generally if the source as viewed from the detector takes up a solid angle of less than 0.5 millisteradians, this information can be combined with a model of x-ray photon scattering to yield an improved coincidence detection.

For example, if the first interaction is a Compton interaction and the second interaction is a photoelectric interaction, the total incident photon energy can be estimated as the sum of the deposited energies in the two interactions and the scattering angle can be calculated from the positions of the two interaction in relation to the direction of incidence. This angle can then be compared with the estimated incident energy and the registered energy in the Compton interaction, by using the Compton scatter formula or the Klein-Nishina cross-section. In this way, the likelihood that two interactions were generated from a single incident photon can be calculated.

It will be appreciated that this is a non-limiting example and that other numbers and combinations of interactions can be processed in a similar way. It will also be appreciated that having a localized source, thereby providing information about the direction of photon incidence on the detector, is necessary for this type of coincidence detection.

For example, the coincidence detection system may be configured to combine said photon scattering model and prior knowledge about the location of the x-ray source with prior knowledge of the probability of different incident x-ray energy distributions to determine and/or obtain said information about the radiation. By way of example, such prior knowledge may take the form of a model for the x-ray source spectrum based on tabulated or simulated x-ray tube spectra, filtered through different materials. The prior knowledge may also include knowledge that there are negligible amounts of incident radiation with energies below a certain energy, such as 20 keV, or above a certain energy, such as 160 keV. Also, such prior information may include a model for the probability that the x-ray beam has passed through different thickness combinations of different basis materials, in combination with a model for the output spectrum from the x-ray tube. Also, such prior information may include knowledge about typical interactions energies of secondary photoelectric interactions, e.g. these being localized to a specific part of the detected spectrum of deposited energies.

In a particular example, the x-ray detector is a photon-counting multi-bin x-ray detector able to discriminate between different photon interaction energies, and the coincidence detection system is configured to use information on photon interaction energies for determining said information about the radiation.

By way of example, the coincidence detection system may be configured to determine and/or obtain said information about the radiation based on at least one representation of the time and/or timing of photon interactions. This information can, by way of example, be provided as a measurement of the time point at which an electrical pulse attains its largest amplitude, where said pulse is generated by the interaction of an x-ray photon in a sensor material.

Optionally, the coincidence detection system may be configured to determine and/or obtain said information about the radiation also based on at least one of information about position of photon interaction(s) and information about deposited energy in the photon interaction(s).

For example, the coincidence detection system may be configured to determine and/or obtain said information about the radiation incident on the detector based on identifying at least one set of photon interactions generatable by a single incident photon.

In a particular example, the coincidence detection system is configured to generate and/or obtain information about the radiation incident on the x-ray detector based on identifying at least two sets of photon interactions likely to have been generated by at least two different incident photons, where all photon interactions in each set are likely to have been generated by a single incident photon, and wherein said coincidence detection system is configured to identify said at least two sets of photon interactions as being likely to have been generated by at least two different incident photons based on comparing these sets of photon interactions with at least one other possible set of photon interactions.

For example, the coincidence detection system may be configured to generate and/or obtain information about the radiation incident on the x-ray detector based on said information about time of photon interactions in combination with at least one angle defined by at least two photon interaction positions and/or based on at least one angle defined by three photon interaction positions and/or based on at least one angle defined by the incident radiation direction and two photon interaction positions. By way of example, such angles may be put in relation to the deposited energy in at least one of the interactions and used to calculate a likelihood of a particular interaction order or grouping of interactions into a set of interactions generatable by a single interaction, by use of a photon scattering model. The interaction order refers to an order of interactions that could have been generated consecutively by a single photon. The correct interaction order corresponds to the chronological order of interactions generated by a single incident photon.

In a particular example, the x-ray detector is a silicon detector.

Normally, the x-ray detector system is configured to discriminate between Compton and photoelectric interactions based on an energy threshold. By way of example, the interactions depositing energies below a certain threshold may be identified as Compton interactions and the interactions with energies above a certain threshold may be identified as photoelectric interactions, where said threshold is exemplarily selected as an energy where the spectrum of deposited energies attains a local minimum, or where the amount of Compton and photoelectric interactions are approximately equal.

Optionally, the x-ray detector system has highly attenuating blockers for reducing scatter within the x-ray detector. By reducing scatter, the number of detected interactions decreases which reduces the total number of interactions during a time interval. This could simplify the coincidence detection method e.g. by decreasing the number of potential coincidences. However, reducing scatter also results in photons being absorbed without depositing their entire energy in the detector which, on the other hand, could increase the difficulty of coincidence detection.

By way of example, the x-ray detector system may be configured to employ logic for estimating the position of interaction based on an estimate of the amount of charge diffusion.

In a particular example, the coincidence detection system may be configured to operate based on a model of the x-ray detector.

By way of example, the coincidence detection system may be configured for operation based on a photon scattering model and said photon scattering model may be based on at least one of the Compton scatter formula, the Klein-Nishina formula, the Lambert-Beer law, x-ray interaction cross-sections for photoelectric effect, Compton effect or Rayleigh scattering, and a simulation of photon transport.

In a particular example, the coincidence detection system may be configured for operation based on a photon scattering model and said photon scattering model includes Rayleigh scattering, or alternatively excludes Rayleigh scattering. Rayleigh scattering describes the elastic spreading of photons from bound electrons. This type of scattering results in a deflection of the incident photon but results in no released electron-hole pairs as no energy is deposited.

The coincidence detection system may be configured to process the photon interactions detected in the entire detector volume or in a sub-volume of the detector independently of at least one other sub-volume. Processing the data in a sub-volume can for example be preferable since data from the entire detector then does not need to be aggregated together, and because it is computationally easier to perform a correction with a smaller number of interactions in the sub-volume. By way of example, a sub-volume could consist of a single physical detector module and or also multiple physical detector modules.

However, the sub-volumes do not necessarily have to be defined by physical detector modules but could also involve one or many partial volumes from one or many physical detector modules.

For example, the coincidence detection system may be configured to obtain and/or determine said information about incident radiation based on at least one of a maximum likelihood method, a maximum a posteriori method, a neural network, a support vector machine or a decision tree-based method.

A maximum likelihood may comprise the steps of calculating a likelihood of a certain incident photon configuration and selecting such a photon configuration by optimizing said likelihood. By way of example, prior information may be incorporated for example by including a prior model for the probability of different incident spectra or other prior information, thereby yielding a maximum a posteriori algorithm and improving the estimation.

By way of example, a neural network estimator may take input data comprising registered photon counts, energies and positions and process this using an artificial neural network to generate output data related to the number of estimated incident counts or the estimated incident energy. This network can be trained on simulated or measured data.

By way of example, a decision tree-based method may process input data in several consecutive comparison steps, and produce an output based on the outcome of such comparisons. Several decision trees may be aggregated to form a compound estimator, for example through bootstrap aggregation.

As an example, the coincidence detection system may be configured to obtain and/or determine said information about radiation incident on the x-ray detector based on assigning at least one likelihood to at least one set of photon interactions, where said likelihood is based on the probability of observing these photon interactions.

Optionally, the coincidence detection system is configured to obtain and/or determine said information about radiation incident on the x-ray detector based on optimizing a likelihood, where said likelihood is based on the probability of observing these photon interactions.

For example, the coincidence detection system may be configured to obtain and/or determine said information about radiation incident on the x-ray detector based on assigning at least one likelihood to at least one set of photon interactions, where said likelihood is based on the probability of observing these photon interactions if they all originate from a single incident photon.

In a particular example, the coincidence detection system is configured to assign, for each of a plurality of photon interactions, the interaction to a set of photon interactions based on said at least one likelihood of observing these photon interactions from a single incident photon.

By way of example, the coincidence detection system may be configured to assign said plurality of photon interactions to sets of photon interactions in such a way that no interaction is assigned to more than one set.

For example, the coincidence detection system may be configured to assign at least one interaction order to the photon interactions in at least one of said sets based on a likelihood of this interaction order. Such an interaction order may be selected, as an example, as the interaction order that has largest likelihood of all possible interaction orders.

In a particular example, the coincidence detection system is configured to assign an estimated position of photon incidence to at least one set of photon interactions based on the position of the first photon interaction in the set as specified by at least one interaction order.

As an example, x-ray detector system is configured to estimate the energy of at least one incident photon based on detected energies of photon interactions within at least one set of photon interactions likely to originate from a single incident photon. By way of example this could be performed by summing the energies of the photon interactions in said set.

In an optional embodiment, the x-ray detector system is configured to estimate the number of photons incident on the x-ray detector or at least one sub-volume of the x-ray detector in at least one time interval based on said at least one likelihood.

By way of example, the likelihood(s) may be calculated based on a prior probability distribution on a set of possible spectra incident on the x-ray detector.

Optionally, the coincidence detection system may be configured to be applied to measured data prior to at least one of summing measured counts over time intervals and reading them out from the photon-counting x-ray detector.

For example, the x-ray detector system may be configured to output said information about the radiation incident on the x-ray detector for use as input data to at least one of an image reconstruction algorithm, a basis material decomposition algorithm, a denoising algorithm, a deblurring algorithm, a pileup correction algorithm or a spectral distortion correction algorithm.

By way of example, an image reconstruction algorithm may take a representation of projection count data as input and give a reconstructed image as an output. A basis material decomposition algorithm may take count data as input and give basis images or basis sinograms as output. A denoising algorithm may take a noisy image or sinogram as input and give a denoised sinogram or image as output. A deblurring algorithm may take a low-resolution image as input and give a high-resolution image as output. A pileup algorithm may take count data distorted by pileup as input and give a corrected image as output. A spectral distortion correction algorithm may take count data distorted by a nonideal detector response function as input and give corrected count data as output.

An image reconstruction algorithm, a basis material decomposition algorithm, a denoising algorithm, a deblurring algorithm, a pileup correction algorithm or a spectral distortion correction algorithm can for example build on maximum a posteriori, block-matching, bilateral filtering or convolutional neural networks.

In a preferred embodiment, the coincidence detection is implemented in digital processing circuitry connected to the detector, for example by a microcode sequencer or FPGA. In another embodiment, the coincidence detection is implemented in analog processing circuitry, or in a computer after reading out the data from the detector.

According to another aspect, not encompassed by the appended claims, there is provided an overall x-ray imaging system comprising such an x-ray detector system.

By way of example, the x-ray imaging system may be configured to estimate the energy of at least one incident photon based on detected energies of photon interactions within at least one set of photon interactions likely to originate from a single incident photon.

According to yet another aspect, not encompassed by the appended claims, is provided a coincidence detection system 60 configured to be operated with a photon-counting x-ray detector 20. The coincidence detection system 60 is configured to determine and/or obtain information about the radiation incident on the x-ray detector 20 based on information about the time of photon interactions in said x-ray detector and information about the location of an x-ray source in relation to the x-ray detector.

According to still another aspect, not encompassed by the appended claims, there is provided a method for obtaining or determining information about the radiation incident on the x-ray detector, as will be described in more detail later on.

For a better understanding the proposed technology will now be described with reference to particular non-limiting examples.

It may be useful to start with a brief introduction to x-ray detector technology in general, followed by a set of non-limiting examples of the present invention.

In general, a challenge for x-ray imaging detectors is to extract maximum information from the detected x-rays to provide input to an image of an object or subject where the object or subject is depicted in terms of density, composition and structure. It is still common to use film-screen as detector but most commonly the detectors today provide a digital image.

Modern x-ray detectors normally need to convert the incident x-rays into electrons, this typically takes place through photo absorption or through Compton interaction and the resulting electrons are usually creating secondary visible light until its energy is lost and this light is in turn detected by a photo-sensitive material. There are also detectors, which are based on semiconductors and in this case the electrons created by the x-ray are creating electric charge in terms of electron-hole pairs which are collected through an applied electric field.

Conventional x-ray detectors are energy integrating, the contribution from each detected photon to the detected signal is therefore proportional to its energy, and in conventional CT, measurements are acquired for a single energy distribution. The images produced by a conventional CT system therefore have a certain look, where different tissues and materials show typical values in certain ranges.

There are detectors operating in an integrating mode in the sense that they provide an integrated signal from a multitude of x-rays and the signal is only later digitized to retrieve a best guess of the number of incident x-rays in a pixel.

Photon counting detectors have also emerged as a feasible alternative in some applications; currently those detectors are commercially available mainly in mammography. The photon counting detectors have an advantage since in principle the energy for each x-ray can be measured which yields additional information about the composition of the object. This information can be used to increase the image quality and/or to decrease the radiation dose.

The most promising materials for photon-counting x-ray detectors are cadmium telluride (CdTe), cadmium zinc telluride (CZT) and silicon. CdTe and CZT are employed in several photon-counting spectral CT projects for the high absorption efficiency of high-energy x-rays used in clinical CT. However, these projects are progressing slowly due to several drawbacks of CdTe/CZT. CdTe/CZT have low charge carrier mobility, which causes severe pulse pileup at flux rates ten times lower than those encountered in clinical practice. One way to alleviate this problem is to decrease the pixel size, whereas it leads to increased spectrum distortion as a result of charge sharing and K-escape. Also, CdTe/CZT suffer from charge trapping, which would lead to polarization that causes a rapid drop of the output count rate when the photon flux reaches above a certain level.

In contrast, silicon has higher charge carrier mobility and is free from the problem of polarization. The mature manufacturing process and comparably low cost are also its advantages. But silicon has limitations that CdTe/CZT does not have. Silicon sensors must accordingly be quite thick to compensate for its low stopping power. Typically, a silicon sensor needs a thickness of several centimeters to absorb most of the incident photons, whereas CdTe/CZT needs only several millimeters. On the other hand, the long attenuation path of silicon also makes it possible to divide the detector into different depth segments, as will be explained below. This in turn increases the detection efficiency and makes it possible for a silicon-based photon-counting detector possible to properly handle the high fluxes in CT.

When using simple semiconductor materials, such as silicon or germanium, Compton scattering can occur in which only a part of the photon energy is deposited in the detector. This results in a large fraction of the x-ray photons, originally at a higher energy, producing much less electron-hole pairs than expected, which in turn results in a substantial part of the photon flux appearing at the low end of the energy distribution. In order to detect as many of the x-ray photons as possible, it is therefore necessary to detect as low energies as possible.

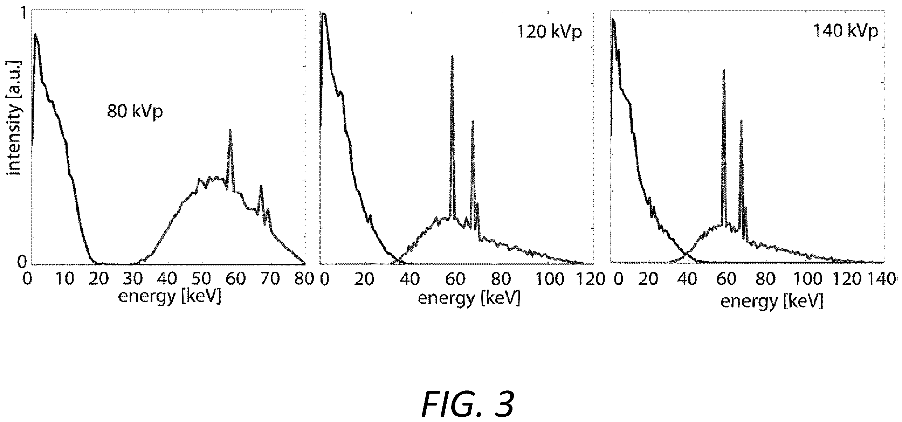

FIG. 3 is a schematic diagram illustrating examples of the energy spectrum for three different x-ray tube voltages. The energy spectrum is built up by deposited energies from a mix of different types of interactions, including Compton events at the lower energy range and photoelectric absorption events at the higher energy range.

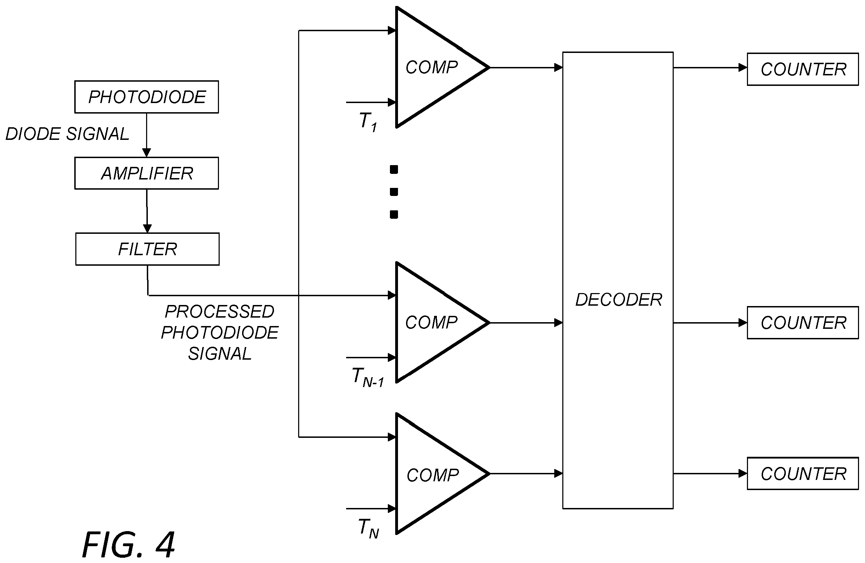

FIG. 4 is a schematic diagram illustrating an example of the conceptual structure for implementing an energy-discriminating photon-counting detector.

A further improvement relates to the development of so-called energy-discriminating photon-counting detectors, e.g. as schematically illustrated in FIG. 4. In this type of x-ray detectors, each registered photon generates a current pulse which is compared to a set of thresholds, thereby counting the number of photons incident in each of a number of so-called energy bins. This may be very useful in the image reconstruction process.

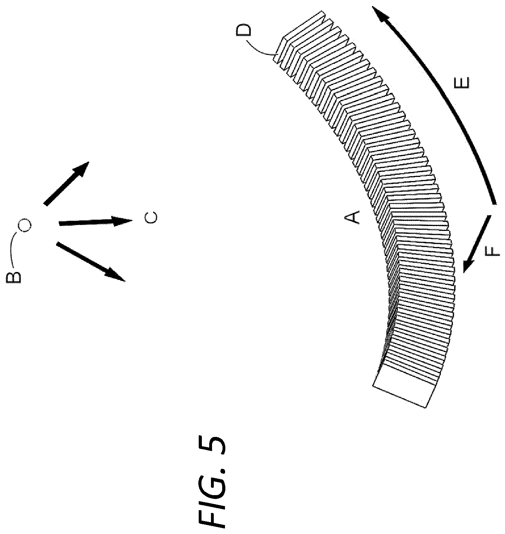

FIG. 5 is a schematic diagram of an X-ray detector according to an exemplary embodiment. In this example there is shown a schematic view of an X-ray detector (A) with x-ray source (B) emitting x-rays (C). The elements of the detector (D) are pointing back to the source, and thus preferably arranged in a slightly curved overall configuration. Two possible scanning motions (E,F) of the detector are indicated. In each scanning motion the source may be stationary or moving, in the scanning motion indicated by (E) the x-ray source and detector may be rotated around an object positioned in between. In the scanning motion indicated with (F) the detector and the source may be translated relative to the object, or the object may be moving. Also, in scan motion (E) the object may be translated during the rotation, so called spiral scanning. By way of example, for CT implementations, the x-ray source and detector may be mounted in a gantry that rotates around the object or subject to be imaged.

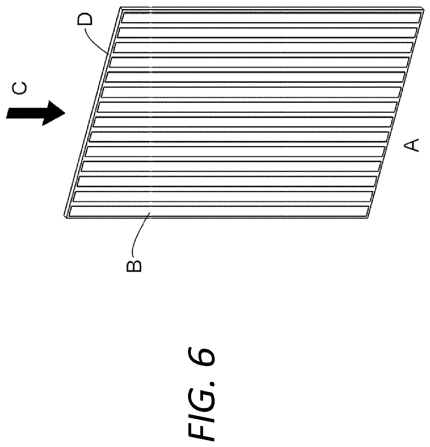

FIG. 6 is a schematic diagram illustrating an example of a semiconductor detector module according to an exemplary embodiment. This is an example of a semiconductor detector module (A) with the sensor part split into detector elements or pixels (B), where each detector element or pixel is normally based on a diode. The x-rays (C) enter through the edge (D) of the semiconductor sensor.

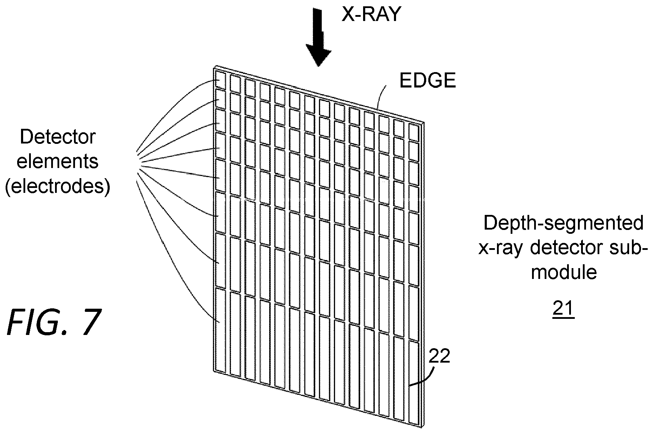

FIG. 7 is a schematic diagram illustrating another example of an x-ray detector sub-module according to an exemplary embodiment. In this example, the sensor part of the x-ray detector sub-module 21 is divided into so-called depth segments in the depth direction, assuming the x-rays enter through the edge. Each detector element 22 is normally based on a diode having a charge collecting electrode as a key component.

Normally, a detector element is an individual x-ray sensitive sub-element of the detector. In general, the photon interaction takes place in a detector element and the thus generated charge is collected by the corresponding electrode of the detector element. Each detector element typically measures the incident x-ray flux as a sequence of frames. A frame is the measured data during a specified time interval, called frame time.

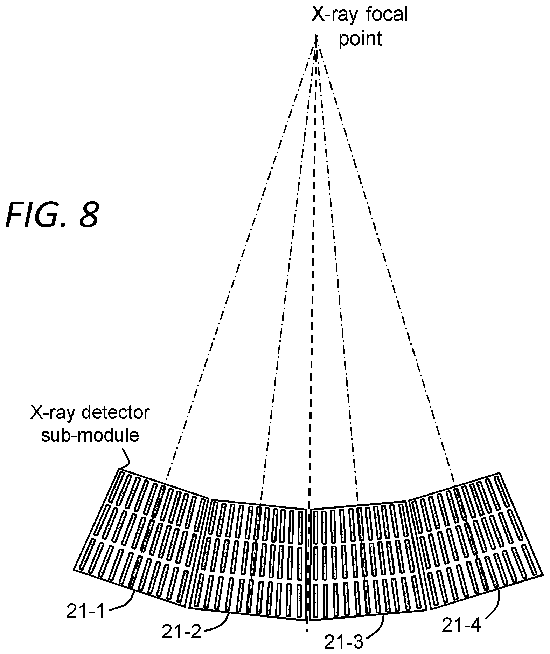

FIG. 8 is a schematic diagram illustrating an example of a modular x-ray detector comprising a number of detector sub-modules 21 arranged side-by-side, e.g. in a slightly curved overall geometry with respect to an x-ray source located at an x-ray focal point.

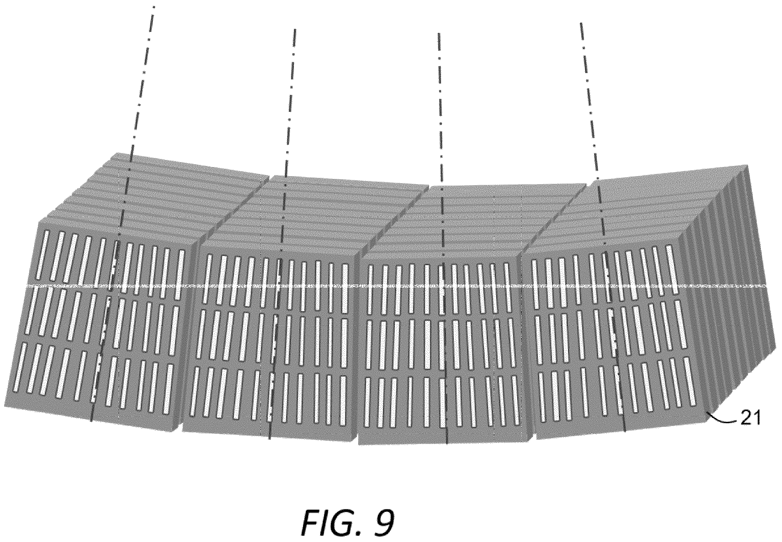

FIG. 9 is a schematic diagram illustrating an example of a modular x-ray detector comprising a number of detector sub-modules 21 arranged side-by-side, and also stacked one after the other. The x-ray detector sub-modules may be stacked one after the other to form larger detector modules that may be assembled together side-by-side to build up an overall x-ray detector system.

As mentioned, edge-on is a design for an x-ray detector, where the x-ray sensors such as x-ray detector elements or pixels are oriented edge-on to incoming x-rays.

For example, the detector may have detector elements in at least two directions, wherein one of the directions of the edge-on detector has a component in the direction of the x-rays. Such an edge-on detector is sometimes referred to as a depth-segmented x-ray detector, having two or more depth segments of detector elements in the direction of the incoming x-rays.

Alternatively, the x-ray detector may be non-depth-segmented, while still arranged edge-on to the incoming x-rays.

Depending on the detector topology, a detector element may correspond to a pixel, e.g. when the detector is a flat-panel detector. However, a depth-segmented detector may be regarded as having a number of detector strips, each strip having a number of depth segments. For such a depth-segmented detector, each depth segment may be regarded as an individual detector element, especially if each of the depth segments is associated with its own individual charge collecting electrode.

The detector strips of a depth-segmented detector normally correspond to the pixels of an ordinary flat-panel detector. However, it is also possible to regard a depth-segmented detector as a three-dimensional pixel array, where each pixel (sometimes referred to as a voxel) corresponds to an individual depth segment/detector element.

Photon counting detectors have emerged as a feasible alternative in some applications; currently those detectors are commercially available mainly in mammography. The photon counting detectors have an advantage since in principle the energy for each x-ray can be measured which yields additional information about the composition of the object. This information can be used to increase the image quality and/or to decrease the radiation dose.

Compared to the energy-integrating systems, photon-counting CT has the following advantages. Firstly, electronic noise that is integrated into the signal by the energy-integrating detectors can be rejected by setting the lowest energy threshold above the noise floor in the photon-counting detectors. Secondly, energy information can be extracted by the detector, which allows improving contrast-to-noise ratio by optimal energy weighting and which also allows so-called material basis decomposition, by which different materials and/or components in the examined subject or object can be identified and quantified, to be implemented effectively. Thirdly, more than two basis materials can be used which benefits decomposition techniques, such as K-edge imaging whereby distribution of contrast agents, e.g. iodine or gadolinium, are quantitatively determined. Fourth, there is no detector afterglow, meaning that high angular resolution can be obtained. Last but not least, higher spatial resolution can be achieved by using smaller pixel size.

A problem in any counting x-ray photon detector is the so-called pile-up problem. When the flux rate of x-ray photons is high there may be problems in distinguishing between two subsequent charge pulses. As mentioned above, the pulse length after the filter depends on the shaping time. If this pulse length is larger than the time between two x-ray photon induced charge pulses, the pulses will grow together, and the two photons are not distinguishable and may be counted as one pulse. This is called pile-up. One way to avoid pile-up at high photon flux is thus to use a small shaping time, or to use depth-segmentation as suggested in optional embodiments described herein.

In order to increase the absorption efficiency, the detector can accordingly be arranged edge-on, in which case the absorption depth can be chosen to any length and the detector can still be fully depleted without going to very high voltages.

In particular, silicon has many advantages as a detector material such as high purity and a low energy required for creation of charge carriers (electron-hole pairs) and also a high mobility for these charge carriers which means it will work even for high rates of x-rays.

The semiconductor x-ray detector sub-modules are normally tiled together to form a full detector of almost arbitrary size with almost perfect geometrical efficiency except for an optional anti-scatter module, e.g. a foil or sheet made of Tungsten, which may be integrated between at least some of the semiconductor detector modules.

More information on so-called photon-counting edge-on x-ray detectors in general can be found, e.g. in US Patent 8,183,535, which discloses an example of a photon-counting edge-on x-ray detector. In US Patent 8,183,535, there are multiple semiconductor detector modules arranged together to form an overall detector area, where each semiconductor detector module comprises an x-ray sensor that is oriented edge-on to incoming x-rays and connected to integrated circuitry for registration of x-rays interacting in the x-ray sensor.

As discussed, an overall x-ray detector may for example be based on detector sub-modules, or wafers, each of which has a number of depth segments in the direction of the incoming x-rays.

Such detector sub-modules can then be arranged or stacked one after the other and/or arranged side-by-side in a variety of configurations to form any effective detector area or volume. For example, a full detector for CT applications typically has a total area greater than 200 cm2, which results in a large number of detector modules, such as 1500-2000 detector modules.

By way of example, detector sub-modules may generally be arranged side-by-side and/or stacked, e.g. in a planar or slightly curved overall configuration.

In general, it is desirable to have as many detector elements and segments as possible as it increases the spatial resolution. If this also results in smaller electrodes, the electronic noise typically decreases which increases the dose efficiency and energy resolution.

Since the x-ray interactions will be distributed and occurring in different depth segments along the depth (length) of the sensor, the overall count rate will be distributed among the segments in depth, e.g. as can be seen from FIG. 5, which is a schematic diagram illustrating an example of the count rate in each segment. In this example, the first segment is the segment closest to the x-ray source.

By way of example, over a 40 mm deep sensor it would be possible to have 400 segments or more and the count rate would be correspondingly decreased. The sensor depth is vital for dose efficiency and the segmentation protects from pulse pile-up and maintains the spatial resolution of the system.

The electrical current may be measured, e.g., through an amplifier such as Charge Sensitive Amplifier (CSA), followed by a filter such as a Shaping Filter (SF), e.g. as schematically illustrated in previously mentioned FIG. 4.

As the number of electrons and holes from one x-ray event is proportional to the x-ray energy, the total charge in one induced current pulse is proportional to this energy. The current pulse is amplified in the (CSA) amplifier and then filtered by the (SF) filter. By choosing an appropriate shaping time of the SF filter, the pulse amplitude after filtering is proportional to the total charge in the current pulse, and therefore proportional to the x-ray energy. Following the (SF) filter, the pulse amplitude may be measured by comparing its value with one or several threshold values (T₁-T_{N}) in one or more comparators COMP, and counters are introduced by which the number of cases when a pulse is larger than the threshold value may be recorded. In this way it is possible to count and/or record the number of x-ray photons with an energy exceeding an energy corresponding to respective threshold value (T₁-T_{N}) which has been detected within a certain time frame.

When using several different threshold values, a so-called energy-discriminating photon-counting detector is obtained, in which the detected photons can be sorted into energy bins corresponding to the various threshold values. Sometimes, this particular type of photon-counting detector is also referred to as a multi-bin detector.

In general, the energy information allows for new kinds of images to be created, where new information is available and image artifacts inherent to conventional technology can be removed.

In other words, for an energy-discriminating photon-counting detector, the pulse heights are compared to a number of programmable thresholds (T₁-T_{N}) in the comparators and classified according to pulse-height, which in turn is proportional to energy.

However, an inherent problem in any charge sensitive amplifier is that it will add electronic noise to the detected current. In order to avoid detecting noise instead of real X-ray photons, it is therefore important to set the lowest threshold value high enough so that the number of times the noise value exceeds the threshold value is low enough not to disturb the detection of X-ray photons.

By setting the lowest threshold above the noise floor, electronic noise, which is the major obstacle in the reduction of radiation dose of the X-ray imaging systems, can be significantly reduced.

The shaping filter has the general property that large values of the shaping time will lead to a long pulse caused by the x-ray photon and reduce the noise amplitude after the filter. Small values of the shaping time will lead to a short pulse and a larger noise amplitude. Therefore, in order to count as many x-ray photons as possible, it is desirable to use a shaping time that is as long as possible (without causing pile-up) as this would minimize the noise and allow the use of a relatively small threshold level.

The values of the set or table of thresholds, by which the pulse heights are compared in the comparators, affect the quality of the image data generated by the photon-counting detector. Furthermore, these threshold values are temperature dependent. Therefore, in an embodiment, the calibration data generated by the power-consuming circuitries is a set or table or thresholds (T₁-T_{N}).

It should though be understood that it is not necessary to have an energy-discriminating photon-counting detector, although this comes with certain advantages.

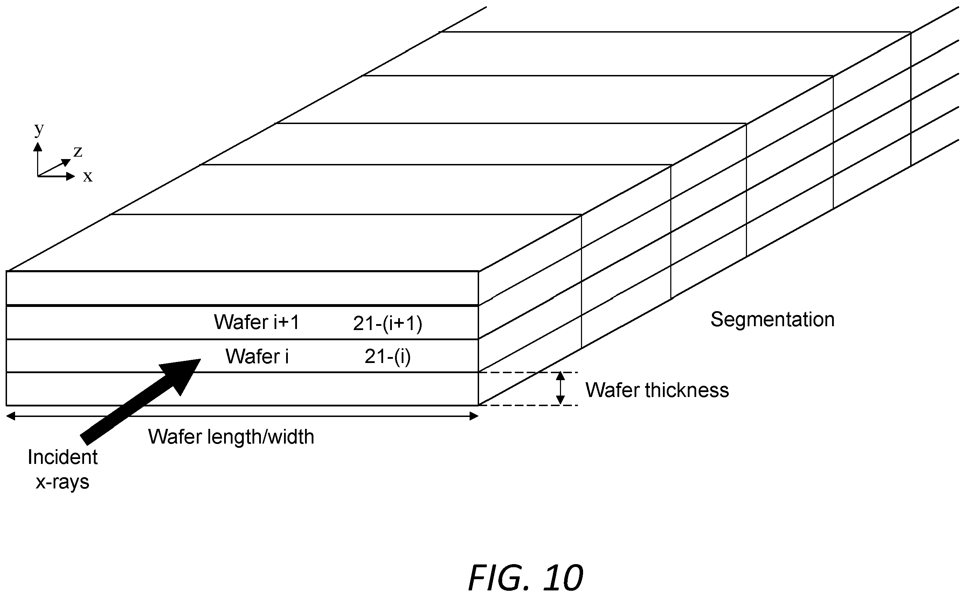

FIG. 10 is a schematic diagram illustrating an example of a photon-counting x-ray detector, which is based on a number of x-ray detector sub-modules 21, here referred to as wafers. The wafers 21 are stacked one after the other. It can be seen that each wafer has a length (x) and a thickness (y), and that each wafer is also segmented in the depth direction (z), so-called depth segmentation. Purely as an example, the length of the wafer may be in order of 25-50 mm, and the depth of the wafer may be in the same order of 25-50 mm, whereas the thickness of the wafer may be in the order of 300-900 um.

By way of example, each wafer has detector elements distributed over the wafer in two directions including the direction of the incoming x-rays (z).

Each wafer has a thickness (y) with two opposite sides, such as a front side and a back side, of different potentials to enable charge drift towards the side, where the detector elements, also referred to as pixels, are normally arranged.

For a better understanding of the proposed technology it may be useful to recall the basic concept of the Compton effect.

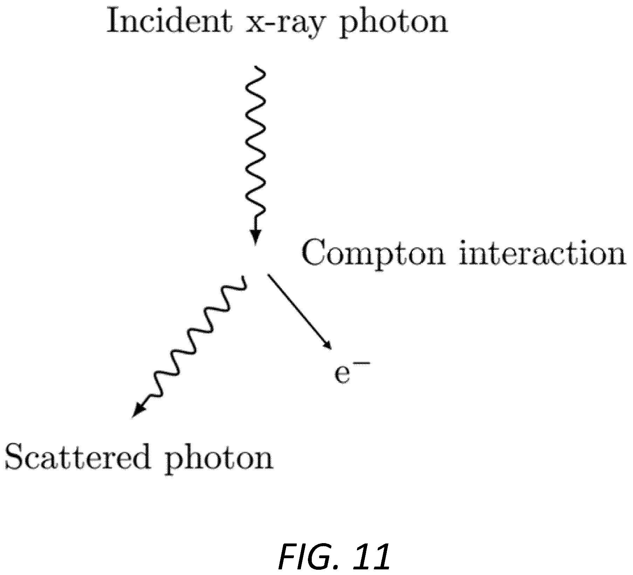

The incoming X-ray photons may interact with the semiconductor material of the detector modules either through the photoelectric effect, simply referred to as the photoeffect herein, or Compton interaction, see FIG. 11.

Compton interaction, also referred to as Compton scattering, is the scattering of a photon by a charged particle, usually an electron. It results in a decrease in energy of the photon, called the Compton effect. Part of the energy of the photon is transferred to the recoiling electron. The photon may be involved in multiple Compton interactions during its path through the semiconductor substrate. Briefly, in a Compton interaction, an incident x-ray photon is deflected from its original path by an interaction with an electron, which is ejected from its initial orbital position to form a so-called secondary or "free" electron. Such a secondary electron can also be the result of the photoeffect, in which case the entire energy of the incident x-ray photon is transferred to the electron.

More specifically, an x-ray photon may create a secondary electron through Compton interaction or photoeffect. The electron will get kinetic energy from the x-ray photon and move a short distance, e.g. 1 um - 50 um, and during its path will excite electron-hole pairs. Every electron hole pair will cost about 3.6 eV to create which means that for example a Compton interaction with 15 keV deposited energy to the electron will create around 4200 electron-hole pairs, forming a so-called charge cloud. The cloud will move or drift according to the electric field lines and if the backside of the detector sub-module or wafer is biased positive the holes will move towards the readout electrodes arranged on the front side of the detector sub-module or wafer and the electrons will move towards the back side. During drift, the electron-hole pairs forming the charge cloud will also be subject to diffusion, which basically means that the charge cloud will increase in size.

The readout electrodes are functioning as detector elements or pixels. By way of example, the voltage on the back side may be around 200 V and virtual ground on the front side.

As should be understood, it may be desirable to orient the x-ray detector edge-on relative to the beam (i.e. edge-on relative to the incoming x-rays), while sub-dividing the sensor area into a relatively high resolution, e.g. into 5 um to 100 um resolution, in order to be able to resolve a charge cloud.

In general, x-ray photons are converted to electron-hole pairs inside the semiconductor material of the x-ray detector, where the number of electron-hole pairs is generally proportional to the photon energy. The electrons and holes are drifting towards the detector elements, then leaving the photon-counting detector. During this drift, the electrons and holes induce an electrical current in the detector elements.

Non-limiting examples of the proposed technology will now be described, primarily with reference to photon-counting silicon x-ray detectors, but the present invention may also be applicable to other types of photon counting x-ray detectors.

The Compton interactions in silicon detectors can result in multiple counts from single photons. Without tungsten shielding, this decreases the signal-to-noise ratio and reduces the spectral information. On the other hand, the unmatched purity and crystal quality of silicon results in very high spatial and spectral resolution, and we propose to use the information of deposited energy in each interaction point to pair Compton interactions caused by the same incident photon employing probability-based methods.

Due to the low atomic number of silicon, Compton interactions are frequent. In Compton interactions only a fraction of the incident photon energy is deposited and a single incident photon can result in multiple counts. Silicon has proved to be a competitive material for photon-counting CT detectors but to improve the performance further, it is desirable to use coincidence techniques to combine Compton scattered photons.

For example, scattered photons can be removed with tungsten shielding or similar anti-scatter modules, leaving Compton counts that contain little energy information but that correspond to unique photons and therefore contribute to image contrast as a photon count. However, if a photon deposits its energy through a series of interactions that end in a photoelectric event, the total photon energy can then be estimated by adding the deposited energies from the interactions in the series. This information is desirable to extract as it improves the spectral performance of the detector.

As Compton scattered photons can be identified based on their energy and scatter angle, the inventors have recognized that it is possible to identify interactions that belong to the same photon based on the interaction position and deposited energy. High spatial and energy resolution will increase the likelihood of finding the correct combination of interactions.

Further, the inventors have realized the feasibility of using coincidence technology to identify and pair interactions that belong to the same incident photon in order to improve the signal-to-noise ratio and spectral performance of a photon-counting x-ray detector. This is especially useful for silicon x-ray detectors.

In silicon detectors, a fraction of the incident photons interacts through Compton interactions. In a Compton interaction, only a part of the incident photon energy is deposited, and this will lead to multiple interactions from a single photon. To eliminate this possibility, tungsten shielding can be used to remove any secondary interactions. As each resulting Compton count then corresponds to a unique photon, Compton counts are not detrimental but instead contribute to the imaging performance. Compton counts are especially important for density-imaging tasks but also improve the contrast in spectral imaging, as set forth in *"*Photon-counting spectral computed tomography using silicon strip detectors: a feasibility study", H. Bornefalk and M. Danielsson, Physics in Medicine and Biology 55, 1999-2022, 2010.

In order to improve the performance of silicon detectors further, it is desirable to use coincidence technology to detect Compton scattered photons instead of (or in combination with) tungsten shielding. In a detector with no tungsten shielding, many photons interact through a series of Compton interactions that end in a photoelectric event. If the entire photon energy has been deposited within the detector, the incident photon energy can be found by adding the deposited energy from the interactions in the series. The identification and pairing of interactions that belong to the same photon is more efficient with high spatial and energy resolution.

In our co-pending patent applications US 16/653200 and PCT/SE2019/051011, we previously presented a method to obtain 1 um resolution in a photon-counting silicon detector.

In the present invention, we aim to evaluate if the achieved spatial resolution can be used to, for example, identify Compton scattered photons based on timing information of photon interactions, optionally in combination with information on deposited energy and interaction position.

A non-limiting purpose of this work is to evaluate the feasibility of using coincidence logic to identify and pair interactions that belong to the same incident photon in order to improve the signal-to-noise ratio and spectral performance of an x-ray detector such as a silicon photon-counting detector.

### Non-limiting example

A silicon detector was modeled using the well-known GATE simulation toolkit and illuminated with an x-ray beam with photon energies sampled from the spectrum of an x-ray source operated at 120 kVp with 30 cm soft tissue filtration between the x-ray source and the detector.

For more information on the GATE simulation toolkit, reference can be made to *"*GATE: a simulation toolkit for PET and SPECT", S. Jan, G. Santin, D. Strul, et al., Physics in Medicine and Biology 49, 4543-4561, 2004.

For each interacting photon, the energies and positions of the resulting interactions were registered along with the interaction types (photoelectric or Compton).

The resulting data was organized into smaller subsets in which each subset represents the interactions that occur in the detector during a certain time window, a snapshot. The interactions in each snapshot were then characterized with respect to interaction energy and position. A maximum likelihood method was then implemented and used to classify the interactions according to the most probable chain of interactions.

### Exemplary results

The following table shows an example of interaction chain probabilities in a silicon detector with no tungsten shielding:

**TABLE 1: Interaction chain probabilities in a silicon detector with no tungsten shielding.**

| Chain of interactions | Interaction chain probability |
|---|---|
| 1 Photoelectric | 31.70% |
| 1 Compton + 1 Photoelectric | 19.26% |
| 1 Compton | 16.09% |
| 2 Compton + 1 Photoelectric | 11.39% |
| 2 Compton | 6.30% |
| 3 Compton + 1 Photoelectric | 6.10 % |
| 4 Compton + 1 Photoelectric | 2.97% |
| 3 Compton | 2.55% |
| 5 Compton + 1 Photoelectric | 1.35% |
| 4 Compton | 0.99% |
| 5 Compton | 0.34% |
| 6 Compton | 0.12% |
| Sum of probabilities | 99.16% |

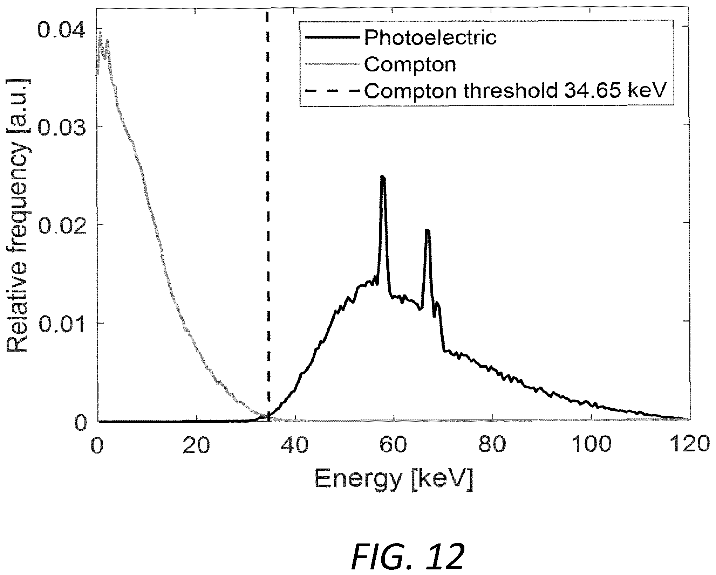

FIG. 12 is a schematic diagram illustrating an example of a spectrum of deposited energies for the Compton and photoelectric parts of the interacting spectrum. The vertical dashed line shows the Compton threshold above which 99.75% of all photoelectric interactions are found and below which 99.70% of all Compton interactions are represented.

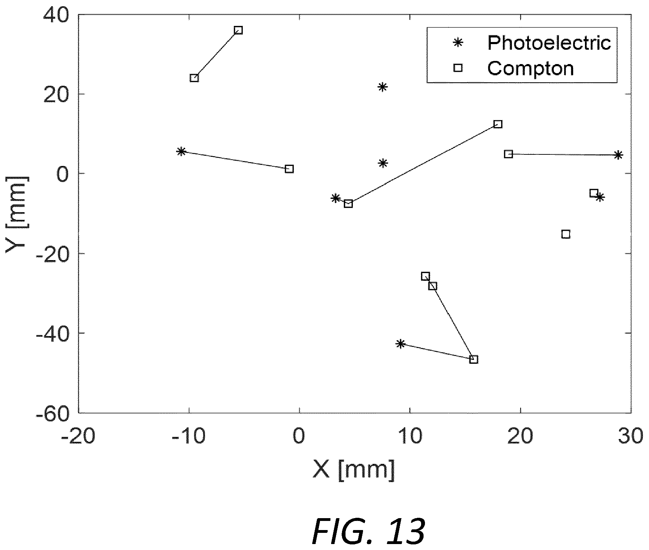

FIG. 13 is a schematic diagram illustrating an example of interactions in one snapshot, i.e. during a certain time interval. The black lines show interactions that belong to the same incident photon.

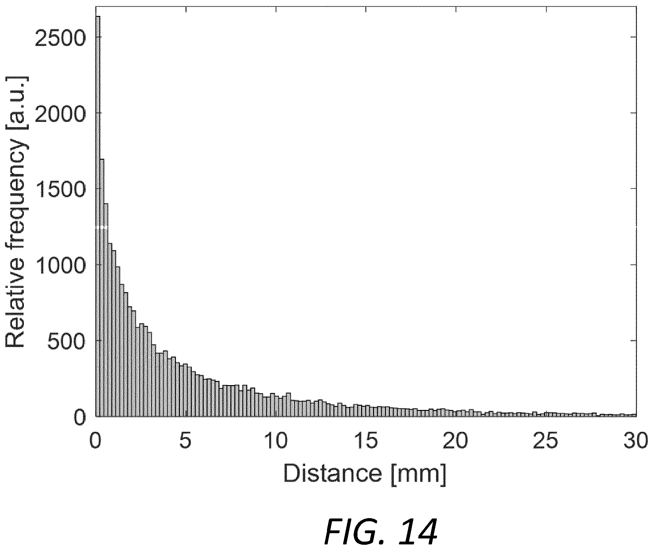

FIG. 14 is a schematic diagram illustrating an example of the 1D scatter distance for the interaction chain 1 Compton + 1 photoelectric.

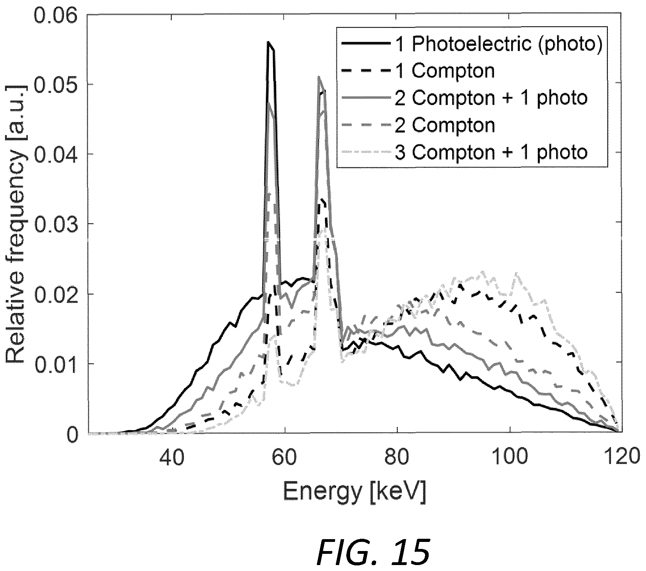

FIG. 15 is a schematic diagram illustrating an example of the spectrum of incident photon energies for different chains of interactions.

Thus, the interaction dynamics in a photon-counting x-ray (silicon) detector, e.g. for spectral CT, has been investigated and characterized. Further, we have evaluated the feasibility of using a Compton coincidence logic, e.g. based on a maximum likelihood method, to identify and pair interactions that belong to the same incident photon and show the effect of this on the spectral performance of the detector. The proposed technology will enable an ideal x-ray detector, with very high energy and position resolution for each incident photon.

It has been shown that it is possible to differentiate between photoelectric and Compton interactions in an x-ray detector such as a silicon detector and that different chains of interactions can be characterized based on photon energy and scatter distance. The results show that it is possible to identify interactions that belong to the same incident photon based on the deposited energy and interaction position.

In general, conventional coincidence detection technology can be found in Compton cameras for application in nuclear medicine and astrophysics, such as described in e.g. R. Todd, J. Nightingale, D. Everett, A proposed γ camera. Nature 251, 132-134 (1974). https://doi.org/10.1038/251132a0, and V. Schönfelder, A. Hirner, K. Schneider, A telescope for soft gamma ray astronomy, Nuclear Instruments and Methods, Volume 107, Issue 2, 1973, Pages 385-394, https://doi.org/10.1016/0029-554X(73)90257-7. Compton cameras are used to detect incident gamma photons in order to determine the location of the emitting source. In nuclear medicine, the incident photons are monoenergetic while applications in astrophysics can involve broad spectrums of energies (ranging from keVs to MeVs).

The present invention provides a solution for using and/or improving coincidence detection technology such as Compton coincidence technology in an x-ray detector which involves detecting photons of many different energies when the location of the emitting source is known.

A Compton gamma camera including a coarse collimator to restrict the acceptance angle of the incident radiation has previously been presented in nuclear medicine, e.g. see US Patent 7,291,841. The patent states the use of highly localized sources in x-ray radiography and how focusing x-ray optic collimators can be designed for specific x-ray tube focal spot distributions. Contrary to this, we herein describe a coincidence detection method in which the location of the source is used in the coincidence technology.

For applications in nuclear medicine, such as Single-Photon Emission Computed Tomography (SPECT) and to some extent Positron Emission Tomography (PET), Compton cameras typically consist of two different detectors: a scatterer and an absorber, e.g. Si + CdTe see Compton imaging with ^{99m}Tc for human imaging", M. Sakai,Y. Kubota, R.K. Parajuli et al. Sci Rep 9, 12906 (2019), doi: 10.1038/s41598-019-49130-z.

On the contrary, in the present invention we propose a coincidence detection method that can be used with a single detector of silicon.

In a Compton camera of e.g. Si + CdTe, incident photons Compton scatter in the silicon part and interact through photoelectric interaction in the CdTe, meaning that the entire photon energy has been deposited in the detector. The direction of the incident photon can then be determined based on the interaction positions and deposited energies using the Compton scattering formula.

Gamma ray tracking has also been presented in Ge detectors to identify interactions that belong to the same incident photon and to obtain the gamma ray energy along with the direction of the incident photon such as described, e.g. in I.Y. Lee, Gamma-ray tracking detectors, Nuclear Instruments and Methods in Physics Research Section A: Accelerators, Spectrometers, Detectors and Associated Equipment, Volume 422, Issues 1-3, 1999, pages 195-200, https://doi.org/10.1016/S0168-9002(98)01093-6.

However, in many applications such as Computed Tomography (CT), instead of determining the direction of the incident photon, the interest lies in quantifying the number of incident photons and their energies. A coincidence detection method for this application therefore has very different requirements. These involve identifying interactions that belong to the same incident photon in order to avoid double-counting single photons and pairing interactions to obtain the incident photon energy. Computed tomography also involves higher incident photon fluxes which increases the difficulty of using coincidence technology.

Various detector systems involving CT and Compton cameras have previously been described, e.g. see US Patent 10,088,580, US Patent 10,067,239, WO 2017015473A8, US Patent 10,274,610, US 2018/0172848A1 **-** this latter document disclosing an edge-on photon counting X-ray detector directed towards estimating the point of interaction of an incident X-ray photon in the semiconductor material by determining or measuring the charge diffusion and distribution originating from a Compton or photoelectric interaction during the path through the semiconductor material. The information regarding the point of interaction is then used for imaging and/or image reconstruction. Further e.g. see US Patent 10,365,383, and US 2020/0096656A1. These do not include a localized source in which the source position can be used in a coincidence detection method, as described herein.

Many conventional coincidence methods rely on time only: two interactions with the same time stamp are automatically assigned to the same photon.

In many applications and/or situations of interest, there will likely be interactions that belong to several photons within the same time window. This requires a coincidence method that is more sophisticated, e.g. finding the optimal solution (number of incident photons and their energies) that corresponds to the registered interactions. The proposed technology provides such a sophisticated solution.

### Examples of other design considerations

The system and/or logic for coincidence detection should be able to separate photoelectric and Compton scattered photons.

To simplify the implementation and use of the coincidence detection method, it might sometimes be desirable to omit the identification of long interaction chains.

Normally, there will be a trade-off between identifying too many and too few coincidences. Ideally there should be one registered event for each incident photon. However, if too many coincidences are identified, some events will incorrectly be removed. On the other hand, if too few are identified, single photons will result in multiple registered events.

Even chains of interactions in which the entire photon energy is not deposited in the detector will be of interest to identify as this eliminates double counting.

With no tungsten shielding or similar anti-scatter modules, many photons deposit their entire energy in the detector. However, this also results in longer chains of interactions which over all increases the difficulty of correctly pairing interactions. With tungsten shielding, pairing interactions will become easier as long interaction chains are removed, but this also reduces the number of photons that deposit their entire energy in the detector which reduces the total spectral information.

The coincidence logic could be performed as a post-processing step or directly in the detector electronics during the data acquisition. Post-processing requires data outputs of the deposited energy and interaction position for each interaction. Coincidence logic in the detector affects the detector design and could involve electronics and/or software that is specially designed to perform the coincidence method.

The coincidence detection technique could be applied continuously as the events are registered or on interactions that occur within a certain time window, a snapshot.

Normally, high spatial resolution is required to obtain the angle between interactions. Also, high energy resolution may be required to correctly register the energy deposited in each event.

In other words, a basic idea is to quantify the number of incident photons and their energies based on the timing of photon interactions, optionally in combination with information on interaction positions and deposited energies in the detector.

By way of example, this could be done by identifying and pairing interactions that belong to the same incident photon based on the interaction positions and deposited energies, or, bypassing the identification and pairing steps, by obtaining the number of incident photons and their energies more directly from the interaction positions and deposited energies.

In the following, a non-limiting example of a coincidence method and/or procedure not encompassed by the appended claims is given.
1. The energy and position of each interaction are registered.
2. The interactions are classified as Compton or photoelectric based on interaction energy.
3. Possible chains of interactions are created from the registered interactions. Each chain of interactions symbolizes the interactions from a single incident photon. An example of an interaction chain could e.g. be 1 Compton interaction + 1 photoelectric interaction.
4. For each possible chain of interactions, the distance and angle between the interactions are calculated along with the total deposited energy and the photon energy between consecutive interactions.
5. The distances, angles, and energies are then used to estimate the likelihood function of each chain of interactions. The likelihood function is based on e.g. the Compton scattering formula, the Klein-Nishina formula, the Beer-Lambert law, and interaction cross sections.
6. The interactions are classified according to the interaction chain that maximizes the likelihood function.

Some steps may be optional, and the steps can be performed to pair a single interaction with nearby interactions and/or to classify a set of interactions to obtain a number of interaction chains.

This method could also be used to obtain the number of incident photons and energies directly from a set of interaction positions and deposited energies e.g. if the likelihood function is obtained by simulating incident photons of well-defined energies and collecting the resulting interactions in the detector with respect to interaction type, position and deposited energy.

In assigning chains of interactions to a large set of interactions, it could be desirable to initially assign each interaction to an interaction chain, either randomly or using probability-based methods. This would result in an initial set of interaction chains which then could be changed iteratively in order to maximize the collective likelihood of the constituting interaction chains and thereby result in the most likely set of interaction chains.

Alternatively, it is possible to apply a method in which machine learning is used determine the number of incident photons and their energies. This could be done by identifying and pairing interactions that belong to the same incident photon based on interaction positions and deposited energies using a deep neural network. Both supervised and unsupervised learning may be applied, as well as reinforcement learning.

According to another alternative, there is provided a method in which a decision tree methodology is used to determine the number of incident photons and their energies. This could be done by pairing interactions that fulfill certain criteria based on interaction positions and deposited energies. E.g. if two interactions are within a certain distance from each other and their total deposited energy exceeds a certain value, they are paired together.

Optionally, the present invention may be combined with techniques for enabling estimation of an initial point of interaction of an x-ray photon in a photon-counting x-ray detector, as will be discussed below.

As a complementary aspect, it may be desirable to enable improved estimation of an initial point of interaction of an x-ray photon in a photon-counting x-ray detector, which is based on a number of x-ray detector sub-modules or wafers, each of which comprises detector elements, wherein the x-ray detector sub-modules are oriented in edge-on geometry with the edge directed towards the x-ray source, assuming the x-rays enter through the edge.

Each detector sub-module or wafer has a thickness with two opposite sides, such as a front/main side and a back side, of different potentials to enable charge drift towards the (front/main) side, where the detector elements, also referred to as pixels, are arranged.

It is possible to determine an estimate of charge diffusion originating from a Compton interaction or an interaction through photoeffect related to the x-ray photon in a (particular) detector sub-module or wafer of the x-ray detector, and estimate the initial point of interaction along the thickness of the detector sub-module at least partly based on the determined estimate of charge diffusion.

By way of example, the shape, and in particular, the width of the charge diffusion is measured or estimated, and the distance between the point of detection and the initial point of interaction is determined based on the shape or width of the charge diffusion or distribution.

For example, the charge diffusion may be represented by a charge cloud, and the detector elements distributed over the detector sub-module or wafer on a main side may provide an array of pixels, where the pixels are generally smaller than the charge cloud to be resolved.

As mentioned, the x-ray detector sub-modules may be oriented in edge-on geometry with the edge directed towards the x-ray source, assuming the x-rays enter through the edge.

Edge-on is a design for an x-ray detector, where the x-ray sensors such as x-ray detector elements or pixels are oriented edge-on to incoming x-rays.

As an example, each of the x-ray detector sub-modules may comprise detector elements distributed over the detector sub-module or wafer in two directions, including the direction of the incoming x-rays. This normally corresponds to a so-called depth-segmented x-ray detector sub-module. The proposed technology is however also applicable for use with non-depth-segmented x-ray detector sub-modules. The detector elements may be arranged as an array in a direction substantially orthogonal to the direction of the incident x-rays, while each of the detector elements is oriented edge-on to the incident x-rays. In other words, the x-ray detector sub-module may be non-depth-segmented, while still arranged edge-on to the incoming x-rays.

In a particular example, at least part of the detector elements, or pixels, have a longer extension in a direction of the incident X-rays than in a direction orthogonal to the direction of the incident X-rays, with a relation of at least 2:1. In other words, the detector elements, or pixels, may be asymmetric in the geometrical design and have at least double the extension (depth) in the direction of the incident X-rays than the extension in a direction orthogonal (perpendicular) to the direction of the incident X-rays.

Optionally, the initial point of interaction of the incident x-ray photon along the thickness of the detector sub-module is estimated based on the measured width of the cloud and the integrated charge of the cloud. As explained, a representation of the charge cloud may be provided by the induced current on triggered detector elements of a detector sub-module.

By way of example, it may be possible to determine an estimate of a distance, along the thickness of the detector sub-module, between the point of detection of the x-ray photon in the detector sub-module and the initial point of interaction based on the estimate of charge diffusion, and then determine an estimate of the initial point of interaction based on the point of detection and the determined estimate of a distance along the thickness of the detector sub-module.

The interaction is an interaction between the x-ray photon and the semiconductor substrate (typically made of silicon).

The thickness of the detector sub-module or wafer generally extends between the two opposite sides, such as the back side and front side, of the detector sub-module.

By way of example, the shape, and in particular, the width of the charge diffusion is measured or estimated, and the distance between the point of detection and the initial point of interaction is determined based on the shape or width of the charge diffusion or distribution.

By way of example, there may be provided a system for enabling estimation of an initial point of interaction of an x-ray photon in a photon-counting x-ray detector. The x-ray detector may be based on a number of x-ray detector sub-modules or wafers, each of which comprises detector elements. The x-ray detector sub-modules may be oriented in edge-on geometry with the edge directed towards an x-ray source (10), assuming the x-rays enter through the edge.

Each detector sub-module or wafer has a thickness with two opposite sides of different potentials to enable charge drift towards the side, where the detector elements, also referred to as pixels, are arranged.

The system may then be configured to determine an estimate of charge diffusion originating from a Compton interaction or an interaction through photo-effect related to the x-ray photon in a detector sub-module or wafer of the x-ray detector; and to estimate the initial point of interaction along the thickness of the detector sub-module based on the determined estimate of charge diffusion.

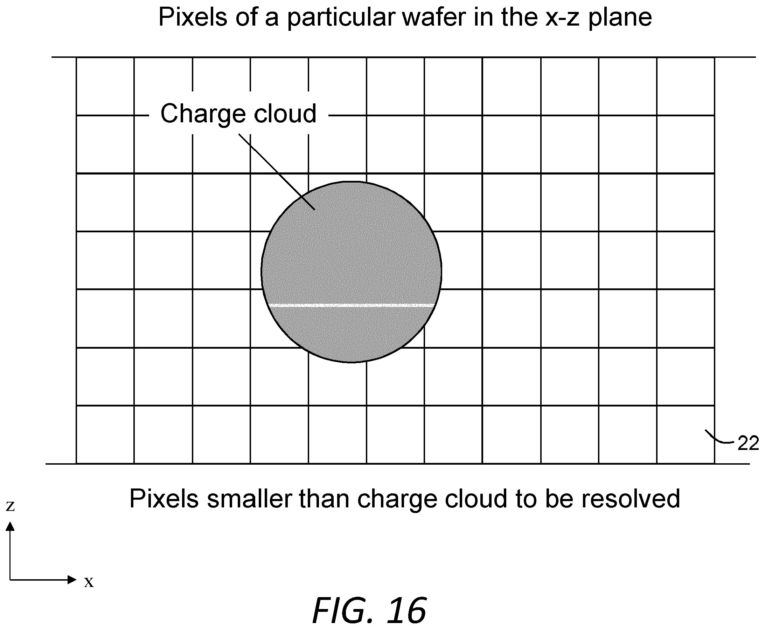

FIG. 16 is a schematic diagram illustrating an example of some of the pixels of a particular wafer in the x-z plane. In this example, the pixels 22 are generally smaller than the charge cloud to be resolved. For example, the charge cloud may have a width in the order of 100 um, and the pixels are therefore normally designed to be smaller or even considerably smaller than that. Hence, an x-ray photon traveling through the semiconductor substrate typically results in a charge cloud covering multiple neighboring pixels in the detector module. This means that a single x-ray photon will most likely trigger event detection in multiple pixels.

Although the pixels 22 are illustrated as squares, it should be understood that the pixels may be rectangular or have other forms.

In a particular example, information about the charge diffusion may be used for providing improved resolution in at least one of the two directions over which the detector elements are distributed on the front side of the detector sub-module or wafer. For example, increased resolution may be obtained based on information of a charge cloud profile in one or both of these directions. The considered direction(s) may include the length (x) direction and/or depth (z) direction of the detector sub-module or wafer.

By way of example, the method therefore further comprises the step of determining an estimate of the point of interaction of the incident x-ray photon in at least one of the two directions (x, z) over which the detector elements are distributed on a main side of the x-ray detector sub-module or wafer.

For example, the step of determining an estimate of the point of interaction of the incident x-ray photon in at least one of the two directions (x, z) over which the detector elements are distributed on the main side may be performed based on information of a charge cloud profile in one or both of the two directions (x, z) over which the detector elements are distributed on the main side of the x-ray detector sub-module or wafer.

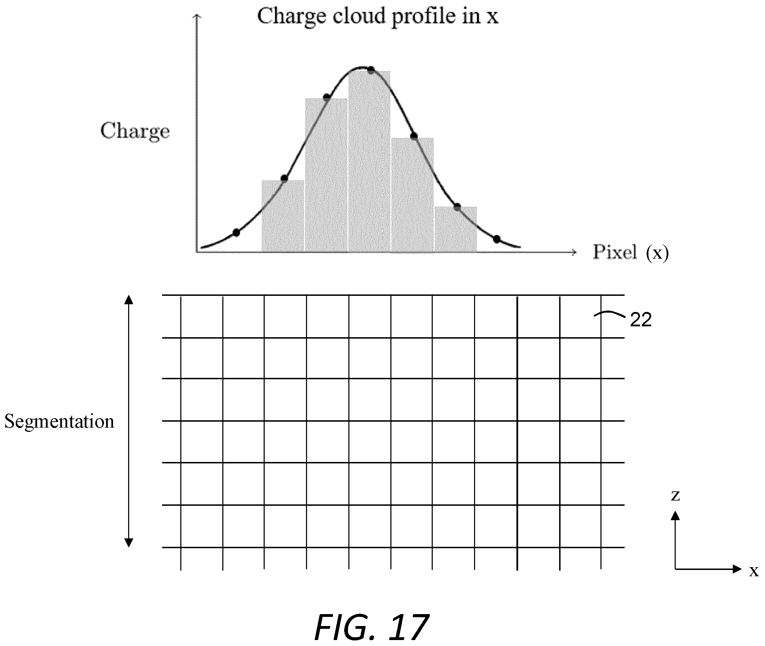

FIG. 17 is a schematic diagram illustrating an example of a charge cloud profile in the x-direction for a charge cloud.

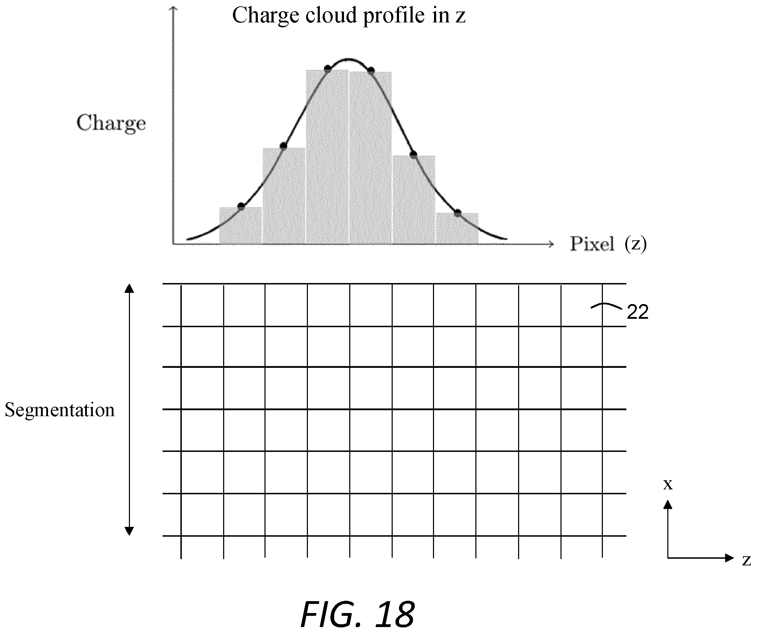

FIG. 18 is a schematic diagram illustrating an example of a charge cloud profile in the z-direction for a charge cloud.

As an example, this may involve determining one or more charge cloud profiles (e.g. see FIG. 17 and FIG. 18) and performing curve fitting through any standard curve fitting methods such as weighted averaging and/or least mean square methods. For example, finding out where the curve has its peak and identifying the peak as the point of interaction in a particular direction, can improve the resolution considerably, even down to sub-pixel resolution, e.g. down to 1 um resolution. This can be compared to the spatial resolution of conventional x-ray imaging systems, which may have a resolution of approximately 1 mm.

Alternatively, it may be possible to use information on which pixel 22 that has detected the highest charge as the point of interaction. For example, the step of determining an estimate of the point of interaction of the incident x-ray photon in at least one of the two directions (x, z) over which the detector elements are distributed on the main side may be performed by identifying the pixel that has detected the highest charge as the point of interaction.

It should though be understood that with a proper curve fitting, as described above, it may be possible to obtain sub-pixel resolution.

As previously indicated, the inventors have realized that the point of detection of a photon may differ quite significantly from the initial point of interaction, along the thickness (y) of the detector sub-module or wafer.

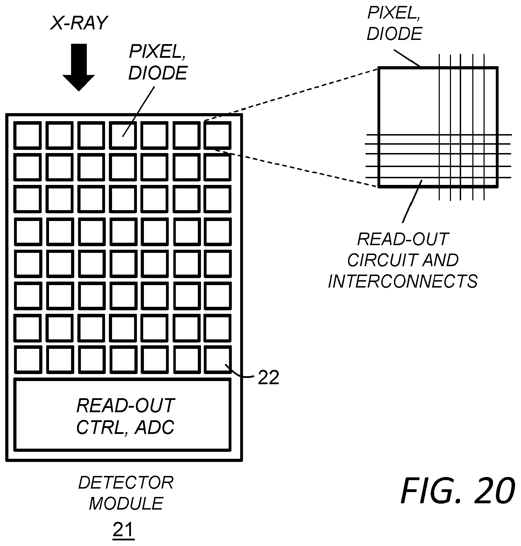

After careful analysis and experiments, the inventors have further recognized that the shape, and in particular, the width of the charge diffusion or cloud is dependent on the distance, along the thickness of the considered detector sub-module or wafer of an x-ray detector, from the initial point of interaction to the point of detection. This is schematically shown in FIG. 20 for three different distances or depths (100 µm, 300 µm and 600 µm).

By way of example, if the charge cloud is not circular in cross-section but rather elliptical or of other forms, and thereby has different extensions in the different directions in the z-x plane, it is recommendable to use the smallest width of the charge cloud cross-section as a relevant measure of the charge diffusion.

During the movement of the charge cloud the charges will diffuse and this is accelerated by electrostatic repulsion. The induced current is dominated by movement of charge that occurs close to the front side. Since the diffusion is a function of time, the charge cloud will be wider (upon collection at the front side) if the interaction took place close to the back side (longer time) compared to close to the front side (negligible diffusion for contributing charge carriers). Knowing the total energy (integrated charge of the electron hole cloud) and the width of the cloud will enable an estimation of the point of interaction along the thickness of the edge-on wafer.

The area of the photon-counting detector, in which coincidental or near simultaneous events are detected in neighboring detector elements (in the x-y plane), thereby also gives depth information (in the z-direction) indicating the point of interaction between an incident x-ray photon and the semiconductor material. Thus, the larger the area of detection the wider the charge diffusion, implying a more remote point of interaction (such as 600 µm) as compared to the case with a smaller area of detection and narrow charge diffusion (such as 100 µm), as schematically illustrated in FIG. 20. Experiments have shown that the resolution may be considerably improved, e.g. down to 50 µm. This is a considerable improvement compared to simply knowing in which wafer the interaction took place. It is now also possible to know, within a resolution of approximately 50 µm, where along the thickness of the wafer the initial point of interaction occurred.

FIG. 20 is a schematic diagram of a detector module, also referred to as a chip or wafer, according to an embodiment. In this example, the detector module 21 comprises a semiconductor substrate or material comprising a plurality of active integrated pixels arranged in the semiconductor substrate. In a particular embodiment, the plurality of active integrated pixels is arranged at a main side (front side) of the semiconductor substrate in a grid or matrix, or other pattern, as shown in the figure. The figure also illustrates the arrangement of the pixels in different depth segments with regard to the edge facing the X-ray source and at which X-rays are incident on the detector module,

In an embodiment, the detector module also comprises further processing circuitry, such as analog processing circuitry and/or digital processing circuitry, exemplified as read-out circuitry, control circuitry and analog-to-digital conversion (ADC) circuitry in the figure. These further processing circuitry may be implemented in or as one or more ASICs.

The further processing circuitry is advantageously arranged in the semiconductor substrate at the same main side (front side) as the plurality of active integrated pixels. In such a case, the further processing circuitry is preferably arranged at the portion or part of the main side at or in connection with the edge facing away from the X-ray source and the incident x-ray as shown in the figure. This embodiment reduces any dead area of the detector module by reducing the portion of the detector module that is used for the further processing circuitry. In addition, the further processing circuitry is protected from the incoming X-ray by be arranged furthest away from the edge of incidence.

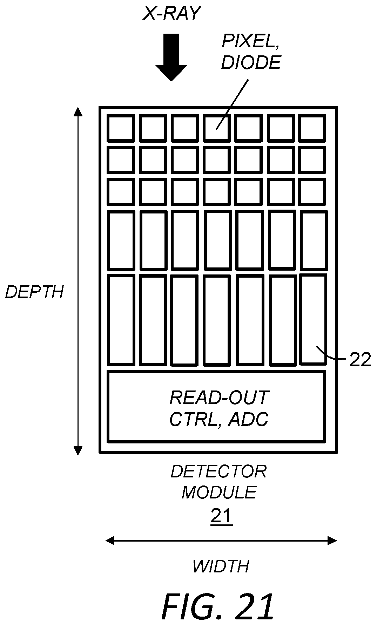

FIG. 20 schematically also indicates an active integrated pixel with a so-called detector diode (electrode) together with read-out electronics and interconnections. Each such active integrated pixel typically has a size in the µm range. In an embodiment, the active integrated pixels are quadratic and typically all active integrated pixels in a detector module have the same shape and size. It is, however, possible to use other shapes for the pixels, such as rectangular, and/or having active integrated pixels with different sizes and/or shapes in the same detector module as shown in FIG. 21. In FIG. 21, the active integrated pixels have the same width but different depths. For instance, the depth of the active integrated pixels may increase for different depth segment and thereby based on

the distance to the edge at which the X-rays are incident on the detector module. This means that the active integrated pixels at this edge preferably have smaller depth as compared to active integrated pixels closest to the opposite edge. In such an embodiment, the detector modules may include active integrated pixels having two or more different depths.

Different pixel depths, and in particular pixel depth as a function of depth segment or distance to the edge at which the X-rays incident on the detector module can be used to tailor the probabilities or likelihoods for detecting an event at an active integrated pixel.

According to a specific aspect of the proposed technology, all or part of the analog signal processing, e.g. the analog processing illustrated in FIG. 4, may be integrated into the pixels to thereby form so-called active integrated pixels.

As mentioned, an aspect of the invention relates to an edge-on photon-counting detector. The edge-on photon-counting detector comprises at least one detector module having a respective edge facing incident X-rays. The at least one detector module comprises a semiconductor substrate.

In a particular example, the edge-on photon-counting detector also comprises a plurality of active integrated pixels arranged in the semiconductor substrate.

In an embodiment, the edge-on photon-counting detector comprises multiple detector modules arranged side-by-side and/or stacked.

The edge-on photon-counting detector is typically fabricated based on silicon as semiconductor material for the detector modules.

To compensate for the low stopping power of silicon, the detector modules are typically oriented in edge-on geometry with their edge directed towards the X-ray source, thereby increasing the absorption thickness. In order to cope with the high photon fluxes in clinical CT, a segmented structure of the active integrated pixels into depth segments is preferably applied, which is achieved by implanting individual active integrated pixels in depth segments on the silicon substrate.

In a particular embodiment, the semiconductor substrate is made of float zone (FZ) silicon. FZ silicon is very pure silicon obtained by vertical zone melting. In the vertical configuration molten silicon has sufficient surface tension to keep the charge from separating. Avoidance of the necessity of a containment vessel prevents contamination of the silicon. Hence, the concentrations of light impurities in the FZ silicon are extremely low. The diameters of FZ silicon wafers are generally not greater than 200 mm due to the surface tension limitations during growth. A polycrystalline rod of ultra-pure electronic grade silicon is passed through an RF heating coil, which creates a localized molten zone from which the crystal ingot grows. A seed crystal is used at one end in order to start the growth. The whole process is carried out in an evacuated chamber or in an inert gas purge. The molten zone carries the impurities away with it and, hence, reduces impurity concentration. Specialized doping techniques like core doping, pill doping, gas doping and neutron transmutation doping may be used to incorporate a uniform concentration of impurity.

The semiconductor substrate is, in an embodiment, made of high resistivity silicon, such as high resistivity FZ silicon. As used herein, high resistivity silicon is defined as monocrystalline silicon having a bulk resistivity larger than 1 kΩcm.

The plurality of active integrated pixels may be implemented as active integrated Complementary Metal Oxide Semiconductor (CMOS) pixels in the semiconductor substrate. Hence, the analog circuitry of the active integrated pixels may be produced using CMOS technology.

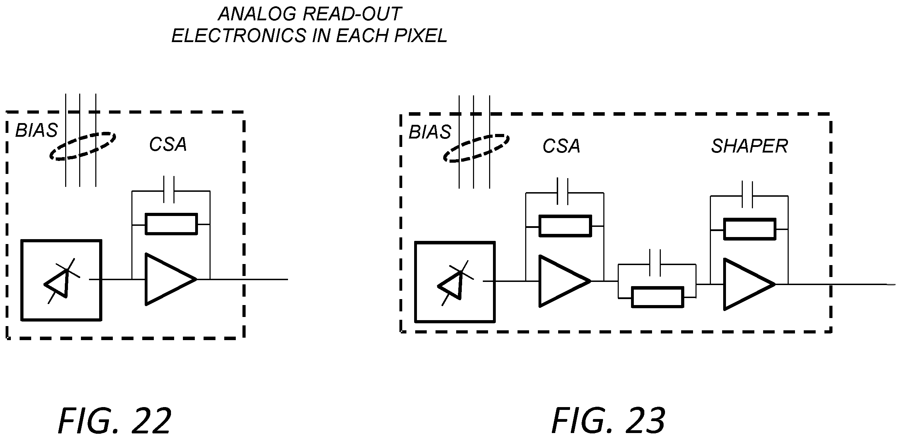

FIGs. 22 to 25 illustrate various embodiments of such active integrated pixels with different analog read-out electronics in the pixels. In these figures, the current generating part of the pixel is illustrated as a diode outputting a current pulse or diode signal.

FIG. 22 illustrates an embodiment of an active integrated pixel comprising an amplifier configured to generate an output signal based on a current pulse generated by the active integrated pixel or diode. In an embodiment, the amplifier is a charge sensitive amplifier (CSA) configured to integrate the current pulse into a voltage signal.

The output signal, such as voltage signal, from the amplifier, preferably CSA, is in this embodiment routed to external processing circuitry arranged in the semiconductor substrate in the detector module, such as in the form of one or more ASICS, see read-out, ctrl and ADC in FIGs. 20 and 21.

With an increased number of active integrated pixels in the detector module the count rate per pixel decreases and also the noise requirements are relaxed. This implies that amplifiers with comparatively low power consumption and low bandwidth can be used in the active integrated pixels. Furthermore, single-ended amplifiers are preferred due to the nature of the diode. This further allows for less complex amplifiers. The lower diode capacitance, the input referred noise from the amplifier will be less dominant as compared to using larger pixel sizes.

FIG. 23 illustrates another embodiment of an active integrated pixel. This embodiment comprises a pulse shaper, also referred to as shaping filter, in addition to the amplifier. This pulse shaper is configured to filter the output signal from the amplifier.

The current pulse from the diode is preferably integrated using a CSA. Typically, this generates a slow-moving voltage at the output of the CSA. To compensate for this behavior a cancellation circuit (CC), such as a pole-zero cancellation circuit, is arranged connected to the CSA and the pulse shaper. This pole-zero CC cancels or at least suppresses the slow response of the CSA with maintained charge/current integration.

Accordingly, the time constant will instead be determined by the shaper integration time of the pulse shaper.

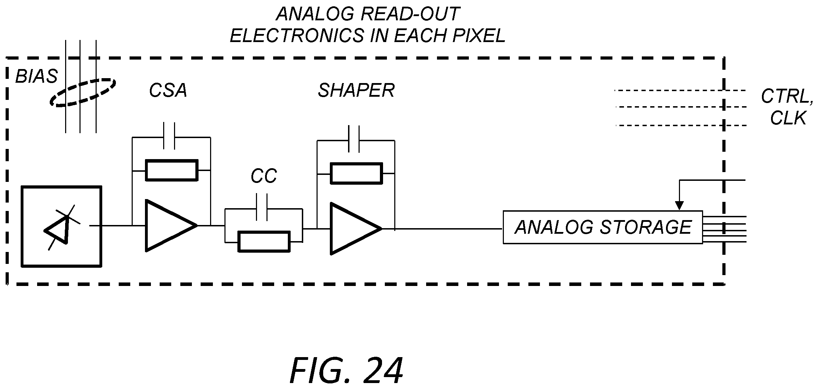

The output signal from the pulse shaper is in this embodiment routed to external processing circuitry arranged in the semiconductor substrate in the detector module, such as in the form of one or more ASICS, see read-out, ctrl and ADC in FIGs. 20 and 21. FIG. 24 illustrates a further embodiment of an active integrated pixel. This embodiment comprise an analog storage connected to, and arranged downstream of, the pulse shaper. This analog storage could be implemented in the active integrated pixel to at least temporarily store and retain the output signal from the pulse shaper. This enables controlled read-out of data from the active integrated pixel and the analog storage, such as based on a control signal (ctrl) and or at scheduled time instances, such as controlled based on a clock signal (clk).

An analog storage as shown in FIG. 24 may also be used in an embodiment as shown in FIG. 22, i.e., without any pulse shaper. In such a case, the analog storage is connected to the amplifier (CSA) or connected to the amplifier (CSA) through the pole-zero CC.

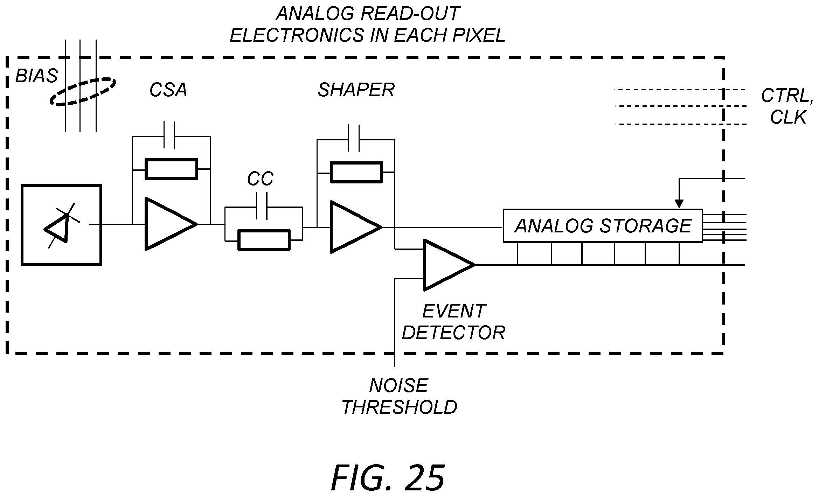

In yet another embodiment as shown in FIG. 25, the pixel comprises an event detector represented as a comparator in the figure. This event detector is then configured to detect a photon event by comparing a pulse amplitude of the output signal from the pulse shaper with a threshold value, represented by a noise threshold in the figure.

In a particular embodiment, the event detector is configured to generate a trigger signal based on the comparison of the pulse amplitude with the threshold value, and preferably generates the trigger signal if the pulse amplitude is equal to or exceeds, or exceeds, the threshold value.

In this embodiment, read-out of the analog storage may be controlled by the trigger signal output by the event detector. Thus, read-out of the data in the analog storage then takes place preferably only when the event detector confirms detection of a photon event by the active integrated pixel as represented by having a pulse amplitude (equal to or) above a noise floor as represented by the noise threshold.

In other words, a comparator acting as an event detector can be used to signal to read-out circuitry, typically arranged externally relative to the active integrated pixel, see read-out in FIGs. 20 and 21. This read-out circuitry reads the analog storage based on the trigger signal from the event detector. The read data may then be further processed, such as compared to thresholds (T₁-T_{N}), see FIG. 4, and/or digitized in an ADC, see FIGs. 20 and 21.

If no read-out of the data in the analog storage is performed the data therein may be consecutively flushed, such as by operating in a first-in-first-out (FIFO) manner. This allows for an asynchronous read out of the data from the analog storage and thereby a reduction in the power consumption during read out.

The trigger signal from the event detector may also be fed to neighboring active integrated pixels in the detector module to trigger them to store data that may then be read out and further processed. This enables detection of properties of the data even through the noise thresholding is not passed.

In another embodiment, read out of the analog storage is performed based on not only a trigger signal from the event detector in the active integrated pixel but also from a respective trigger signal from at least one neighboring active integrated pixel in the detector module.

Implementations of active integrated pixels enable a reduction in size of the pixels as compared to prior art solutions. This small size of the active integrated pixels allows multiple active integrated pixels in a detector sub-module to detect a charge cloud generated by a single x-ray photon. This in turn enables determination of an estimate of charge diffusion originating from a Compton interaction or an interaction through photoeffect related to the X-ray photon in a particular detector sub-module of the edge-on photon-counting detector, and estimation of the initial point of interaction of the x-ray photon along the thickness of the detector sub-module at least partly based on the determined estimate of charge diffusion, e.g. as previously described.

It will be appreciated that the methods and devices described herein can be combined and re-arranged in a variety of ways.

For example, specific functions may be implemented in hardware, or in software for execution by suitable processing circuitry, or a combination thereof.

The steps, functions, procedures, modules and/or blocks described herein may be implemented in hardware using any conventional technology, such as semiconductor technology, discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs).

Alternatively, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

By way of example, the x-ray imaging system may be a Computed Tomography (CT) system.

In a particular example, the x-ray imaging system further comprises an associated image processing device connected to the x-ray detector system for performing the image reconstruction.

According to a fourth aspect, not encompassed by the appended claims, there is provided a corresponding computer program and computer-program product.

In particular, there is provided a computer program comprising instructions, which when executed by a processor, cause the processor to perform the method(s) described herein. For example, there may also be provided a computer-program product comprising a non-transitory computer-readable medium having stored thereon such a computer program.

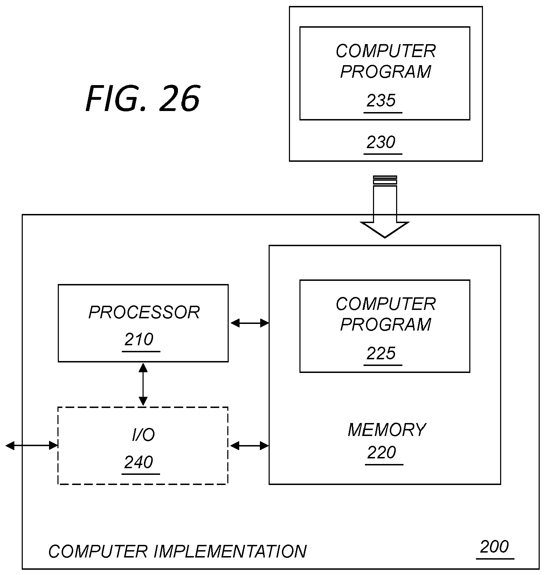

FIG. 26 is a schematic diagram illustrating an example of a computer implementation. In this particular example, the system 200 comprises a processor 210 and a memory 220, the memory comprising instructions executable by the processor, whereby the processor is operative to perform the steps and/or actions described herein. The instructions are typically organized as a computer program 225; 235, which may be preconfigured in the memory 220 or downloaded from an external memory device 230. Optionally, the system 200 comprises an input/output interface 240 that may be interconnected to the processor(s) 210 and/or the memory 220 to enable input and/or output of relevant data such as input parameter(s) and/or resulting output parameter(s).

In a particular example, the memory comprises such a set of instructions executable by the processor, whereby the processor is operative to determine an estimate or measure of charge diffusion and estimate the initial point of interaction along the thickness of the detector sub-module based on the determined estimate of charge diffusion.

The term 'processor' should be interpreted in a general sense as any system or device capable of executing program code or computer program instructions to perform a particular processing, determining or computing task.

The processing circuitry including one or more processors is thus configured to perform, when executing the computer program, well-defined processing tasks such as those described herein.

The processing circuitry does not have to be dedicated to only execute the above-described steps, functions, procedure and/or blocks, but may also execute other tasks.

The proposed technology also provides a computer-program product comprising a computer-readable medium 220; 230 having stored thereon such a computer program.

By way of example, the software or computer program 225; 235 may be realized as a computer program product, which is normally carried or stored on a computer-readable medium 220; 230, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

Method flows may be regarded as a computer action flows, when performed by one or more processors. A corresponding device, system and/or apparatus may be defined as a group of function modules, where each step performed by the processor corresponds to a function module. In this case, the function modules are implemented as a computer program running on the processor. Hence, the device, system and/or apparatus may alternatively be defined as a group of function modules, where the function modules are implemented as a computer program running on at least one processor.

The computer program residing in memory may thus be organized as appropriate function modules configured to perform, when executed by the processor, at least part of the steps and/or tasks described herein.

Alternatively, it is possibly to realize the modules predominantly by hardware modules, or alternatively by hardware as pure hardware logic. The extent of software versus hardware is purely implementation selection.

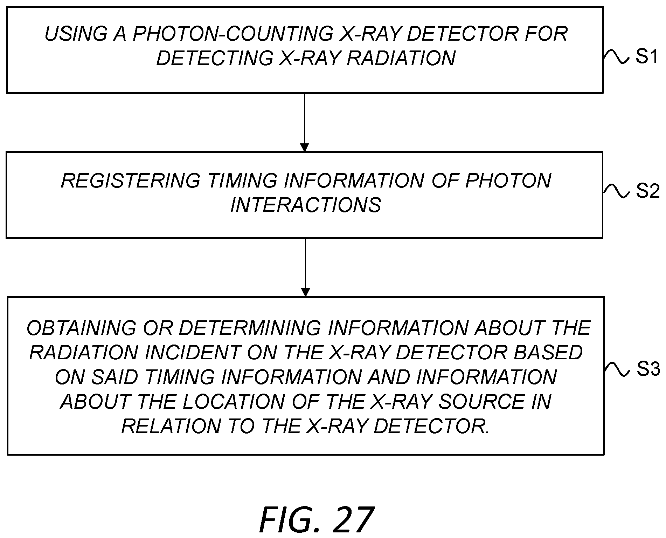

FIG. 27 is a schematic flow diagram illustrating an example of a method for obtaining or determining information about the radiation incident on the x-ray detector, which is not encompassed by the appended claims.

Basically, the method comprises the steps of:
S1: using a photon-counting x-ray detector for detecting x-ray radiation, where said photon-counting x-ray detector is configured for operation with a broad-energy x-ray spectrum with a maximum energy of less than 160 keV, emitted from a localized x-ray source;
S2: registering timing information of photon interactions in said photon-counting x-ray detector detector;
S3: obtaining or determining information about the radiation incident on the x-ray detector, including a representation of at least one of the number of incident photons in a particular area, the spatial distribution of incident photons, and the energy distribution of incident photons, based on said timing information and information about the location of the x-ray source in relation to the x-ray detector.

In a particular non-limiting example, the step of obtaining or determining information about the radiation incident on the x-ray detector includes:
identifying at least one set of photon interactions, where the timing information registered about the photon interactions in said set is consistent with all photon interactions in said set originating from a single incident photon, based on the likelihood of said set of photon interactions resulting from a single photon being incident on the x-ray detector, wherein said likelihood is based on the location of the x-ray source in relation to the x-ray detector and at least one of the Compton scatter formula, the Klein-Nishina formula, the Lambert-Beer law, x-ray interaction cross-sections for photoelectric effect, Compton effect or Rayleigh scattering and a simulation of photon transport; and
obtaining or determining information about at least one of the number of incident photons in a particular area, the spatial distribution of incident photons, and the energy distribution of incident photons, based on said set of photon interactions or on said likelihood.

Other illustrative and optional method steps have been previously described in connection with the system descriptions as corresponding functions, i.e. steps and/or actions to be performed by various systems and/or system components.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

## Claims

1. An x-ray detector system (5) comprising:
- a photon-counting x-ray detector (20) for detecting x-ray radiation from an x- ray source and registering the energy and position of each of a plurality of photon interactions to provide a resulting data set; and
- a coincidence detection system (60) configured to i) organize the resulting data set into smaller subsets, each representing interactions that occur in the detector during a time window, also referred to as a snapshot, and ii) determine, for each snapshot, information about the radiation incident on the x-ray detector, including at least one of the number of incident photons in a particular area, spatial distribution of incident photons and energy distribution of incident photons, based on:
information, for each of a number of incident photons, about the time or timing of detected photon interactions within a set of photon interactions likely to have been generated by the incident photon through at least one Compton scattering in the x-ray detector, corresponding to a chain of one or more Compton interactions and possibly a photoelectric interaction, in combination with information about positions of the photon interactions and information about deposited energy in the photon interactions in said x-ray detector and information about the location of the x-ray source in relation to the x-ray detector,
wherein said coincidence detection system (60) is configured to identify and pair, for each of said number of incident photons, interactions that belong to the same incident photon.

2. The x-ray detector system of claim 1, wherein said coincidence detection system is configured for operation based on a photon scattering model by combining said photon scattering model with said information about the location of the x-ray source in relation to the x-ray detector to determine and/or obtain said information about the radiation.

3. The x-ray detector system of claim 2, wherein said coincidence detection system is configured to combine said photon scattering model and prior knowledge about the location of the x-ray source with prior knowledge of the probability of different incident x-ray energy distributions to determine and/or obtain said information about the radiation.

4. The x-ray detector system of any of claims 1-3, wherein said x-ray detector is a photon-counting multi-bin x-ray detector able to discriminate between different photon interaction energies, and the coincidence detection system is configured to use information on photon interaction energies for determining said information about the radiation.

5. The x-ray detector system of any of claims 1-4, wherein said coincidence detection system is configured to determine and/or obtain said information about the radiation based on measurement of the time and/or timing of photon interactions.

6. The x-ray detector system of any of claims 1-5, wherein said coincidence detection system is configured to determine and/or obtain said information about the radiation incident on the detector based on identifying at least one set of photon interactions generatable by a single incident photon.

7. The x-ray detector system of claim 6, wherein said coincidence detection system is configured to generate and/or obtain information about the radiation incident on the x-ray detector based on identifying at least two sets of photon interactions likely to have been generated by at least two different incident photons, where all photon interactions in each set are likely to have been generated by a single incident photon, and wherein said coincidence detection system is configured to identify said at least two sets of photon interactions as being likely to have been generated by at least two different incident photons based on comparing these sets of photon interactions with at least one other possible set of photon interactions.

8. The x-ray detector system of any of claims 1-7, wherein said coincidence detection system is configured to generate and/or obtain information about the radiation incident on the x-ray detector based on said information about time of photon interactions in combination with at least one angle defined by at least two photon interaction positions and/or based on at least one angle defined by three photon interaction positions and/or based on at least one angle defined by the incident radiation direction and two photon interaction positions.

9. The x-ray detector system of any of claims 1-8, wherein said x-ray detector is a silicon detector.

10. The x-ray detector system of claim 9, where the x-ray detector system is configured to discriminate between Compton and photoelectric interactions based on an energy threshold.

11. The x-ray detector system of any of claims 1-10, wherein the x-ray detector system has highly attenuating blockers for reducing scatter within the x-ray detector.

12. The x-ray detector system of any of claims 1-11, wherein the x-ray detector system is configured to employ logic for estimating the position of interaction based on an estimate of the amount of charge diffusion.

13. The x-ray detector system of any of claims 1-12, wherein said coincidence detection system is configured to operate based on a model of the x-ray detector.

14. The x-ray detector system of any of claims 1-13, wherein said coincidence detection system is configured for operation based on a photon scattering model and said photon scattering model is based on at least one of the Compton scatter formula, the Klein-Nishina formula, the Lambert-Beer law, x-ray interaction cross- sections for photoelectric effect, Compton effect or Rayleigh scattering, and a simulation of photon transport.

15. The x-ray detector system of any of claims 1-14, wherein said coincidence detection system is configured for operation based on a photon scattering model and said photon scattering model includes Rayleigh scattering, or alternatively excludes Rayleigh scattering.

16. The x-ray detector system of any of claims 1-15, wherein said coincidence detection system is configured to process the photon interactions detected in the entire detector volume or in a sub-volume of the detector independently of at least one other sub-volume.

17. The x-ray detector system of any of claims 1-16, wherein said coincidence detection system is configured to obtain and/or determine said information about incident radiation based on at least one of a maximum likelihood method, a maximum a posteriori method, a neural network, a support vector machine or a decision tree-based method.

18. The x-ray detector system of any of claims 1-17, wherein said coincidence detection system is configured to obtain and/or determine said information about radiation incident on the x-ray detector based on assigning at least one likelihood to at least one set of photon interactions, where said likelihood is based on the probability of observing these photon interactions.

19. The x-ray detector system of any of claims 1-18, wherein said coincidence detection system is configured to obtain and/or determine said information about radiation incident on the x-ray detector based on optimizing a likelihood, where said likelihood is based on the probability of observing these photon interactions.

20. The x-ray detector system of any of claims 1-19, wherein said coincidence detection system is configured to obtain and/or determine said information about radiation incident on the x-ray detector based on assigning at least one likelihood to at least one set of photon interactions, where said likelihood is based on the probability of observing these photon interactions if they all originate from a single incident photon.

21. The x-ray detector system of any of claims 1-20, wherein said coincidence detection system is configured to assign, for each of a plurality of photon interactions, the interaction to a set of photon interactions based on said at least one likelihood of observing these photon interactions from a single incident photon.

22. The x-ray detector system of claim 21, wherein said coincidence detection system is configured to assign said plurality of photon interactions to sets of photon interactions in such a way that no interaction is assigned to more than one set.

23. The x-ray detector system of any of claims 20-22, wherein said coincidence detection system is configured to assign at least one interaction order to the photon interactions in at least one of said sets based on a likelihood of this interaction order.

24. The x-ray detector system of claim 23, wherein said coincidence detection system is configured to assign an estimated position of photon incidence to at least one set of photon interactions based on the position of the first photon interaction in the set as specified by at least one interaction order.

25. The x-ray detector system of claim 22-24, wherein said x-ray detector system is configured to estimate the energy of at least one incident photon based on detected energies of photon interactions within at least one set of photon interactions likely to originate from a single incident photon.

26. The x-ray detector system of any of claims 20-25, wherein said x-ray detector system is configured to estimate the number of photons incident on the x-ray detector or at least one sub-volume of the x-ray detector in at least one time interval based on said at least one likelihood.

27. The x-ray detector system of any of claims 18-26, where said likelihood is calculated based on a prior probability distribution on a set of possible spectra incident on the x-ray detector.

28. The x-ray detector system of any of claims 1-27, wherein said coincidence detection system is configured to be applied to measured data prior to at least one of summing measured counts over time intervals and reading them out from the photon-counting x-ray detector.

29. The x-ray detector system of any of claims 1-28, wherein said x-ray detector system is configured to output said information about the radiation incident on the x-ray detector for use as input data to at least one of an image reconstruction algorithm, a basis material decomposition algorithm, a denoising algorithm, a deblurring algorithm, a pileup correction algorithm or a spectral distortion correction algorithm.

## Patentansprüche

1. Röntgenstrahlendetektorsystem (5) mit:
- einem photonenzählenden Röntgenstrahlendetektor (20) zum Erfassen von Röntgenstrahlung von einer Röntgenstrahlenquelle und Aufzeichnen der Energie und der Position von jeder von mehreren Photonenwechselwirkungen, um einen resultierenden Datensatz zu liefern; und
- einem Koinzidenzdetektionssystem (60), das dazu ausgebildet ist, i) den resultierenden Datensatz in kleineren Teilsätzen zu organisieren, von denen jeder Wechselwirkungen darstellt, die in dem Detektor während eines Zeitfensters auftreten, auch Schnappschuss genannt, und ii) für jeden Schnappschuss Informationen über die auf den Röntgenstrahlendetektor auftreffende Strahlung zu bestimmen, einschließlich der Anzahl von in einem bestimmten Bereich auftreffenden Photonen, der räumlichen Verteilung der auftreffenden Photonen und/oder der Energieverteilung der auftreffenden Photonen auf Basis von:
Informationen, für jedes aus einer Anzahl von auftreffenden Photonen, über die Zeit oder den zeitlichen Ablauf der erfassten Photonenwechselwirkungen innerhalb eines Satzes von Photonenwechselwirkungen, die wahrscheinlich von dem auftreffenden Photon durch mindestens eine Compton-Streuung in dem Röntgenstrahlendetektor erzeugt worden sind, entsprechend einer Kette von einer oder mehreren Compton-Wechselwirkungen und möglicherweise einer photoelektrischen Wechselwirkung, in Kombination mit Informationen über die Positionen der Photonenwechselwirkungen und Informationen über die abgeschiedene Energie in den Photonenwechselwirkungen in dem Röntgenstrahlendetektor und Informationen über den Ort der Röntgenstrahlenquelle in Bezug auf den Röntgenstrahlendetektor,
wobei das Koinzidenzdetektionssystem (60) dazu ausgebildet ist, für jedes der Anzahl von auftreffenden Photonen die Wechselwirkungen zu identifizieren und zu paaren, die zu dem gleichen auftreffenden Photon gehören.

2. Röntgenstrahlendetektorsystem nach Anspruch 1, wobei das Koinzidenzdetektionssystem zum Betrieb auf Basis eines Photonenstreuungsmodells durch Kombinieren des Photonenstreuungsmodells mit den Informationen über den Ort der Röntgenstrahlenquelle in Bezug auf den Röntgenstrahlendetektor ausgebildet ist, um die Informationen über die Strahlung zu bestimmen und/oder zu erhalten.

3. Röntgenstrahlendetektorsystem nach Anspruch 2, wobei das Koinzidenzdetektionssystem dazu ausgebildet ist, das Photonenstreuungsmodell und vorherige Erkenntnisse über den Ort der Röntgenstrahlenquelle mit vorherigen Erkenntnissen der Wahrscheinlichkeit von verschiedenen Energieverteilungen der auftreffenden Röntgenstrahlung zu kombinieren, um die Informationen über die Strahlung zu bestimmen und/oder zu erhalten.

4. Röntgenstrahlendetektorsystem nach einem der Ansprüche 1 bis 3, wobei der Röntgenstrahlendetektor ein photonenzählender Mehr-Fächer-Röntgenstrahlendetektor ist, der in der Lage ist, zwischen verschiedenen Photonenwechselwirkungsenergien zu unterscheiden, und das Koinzidenzdetektionssystem dazu ausgebildet ist, Informationen über die Photonenwechselwirkungsenergien zum Bestimmen der Informationen über die Strahlung zu verwenden.

5. Röntgenstrahlendetektorsystem nach einem der Ansprüche 1 bis 4, wobei das Koinzidenzdetektionssystem dazu ausgebildet ist, die Informationen über die Strahlung auf Basis einer Messung der Zeit und/oder des zeitlichen Ablaufs der Photonenwechselwirkungen zu bestimmen und/oder zu erhalten.

6. Röntgenstrahlendetektorsystem nach einem der Ansprüche 1 bis 5, wobei das Koinzidenzdetektionssystem dazu ausgebildet ist, die Informationen über die auf den Detektor auftreffende Strahlung auf Basis des Identifizierens von mindestens einem Satz von durch ein einzelnes auftreffendes Photon erzeugbaren Photonenwechselwirkungen zu bestimmen und/oder zu erhalten.

7. Röntgenstrahlendetektorsystem nach Anspruch 6, wobei das Koinzidenzdetektionssystem dazu ausgebildet ist, die Informationen über die auf den Röntgenstrahlendetektor auftreffende Strahlung auf Basis des Identifizierens von mindestens zwei Sätzen von Photonenwechselwirkungen zu erzeugen und/oder zu erhalten, die wahrscheinlich von mindestens zwei verschiedenen auftreffenden Photonen erzeugt worden sind, wobei alle Photonenwechselwirkungen in jedem Satz wahrscheinlich von einem einzelnen auftreffenden Photon erzeugt worden sind, und wobei das Koinzidenzdetektionssystem dazu ausgebildet ist, die mindestens zwei Sätze von Photonenwechselwirkungen, die wahrscheinlich von mindestens zwei verschiedenen auftreffenden Photonen erzeugt worden sind, auf Basis des Vergleichens dieser Sätze von Photonenwechselwirkungen mit mindestens einem weiteren möglichen Satz von Photonenwechselwirkungen zu identifizieren.

8. Röntgenstrahlendetektorsystem nach einem der Ansprüche 1 bis 7, wobei das Koinzidenzdetektionssystem dazu ausgebildet ist, die Informationen über die auf den Röntgenstrahlendetektor auftreffende Strahlung auf Basis der Informationen über die Zeit der Photonenwechselwirkungen in Kombination mit mindestens einem durch mindestens zwei Photonenwechselwirkungspositionen definierten Winkel und/oder auf Basis von mindestens einem durch mindestens drei Photonenwechselwirkungspositionen definierten Winkel und/oder auf Basis von mindestens einem durch die auftreffende Strahlungsrichtung und zwei Photonenwechselwirkungspositionen definierten Winkel zu erzeugen und/oder zu erhalten.

9. Röntgenstrahlendetektorsystem nach einem der Ansprüche 1 bis 8, wobei der Röntgenstrahlendetektor ein Siliziumdetektor ist.

10. Röntgenstrahlendetektorsystem nach Anspruch 9, wobei das Röntgenstrahlendetektorsystem dazu ausgebildet ist, zwischen Compton- und photoelektrischen Wechselwirkungen auf Basis einer Energieschwelle zu unterscheiden.

11. Röntgenstrahlendetektorsystem nach einem der Ansprüche 1 bis 10, wobei das Röntgenstrahlendetektorsystem stark dämpfende Blockierelemente zum Reduzieren der Streuung in dem Röntgenstrahlendetektor aufweist.

12. Röntgenstrahlendetektorsystem nach einem der Ansprüche 1 bis 11, wobei das Röntgenstrahlendetektorsystem dazu ausgebildet ist, eine Logik zum Schätzen der Position der Wechselwirkung auf Basis einer Schätzung der Menge von Ladungsdiffusion einzusetzen.

13. Röntgenstrahlendetektorsystem nach einem der Ansprüche 1 bis 12, wobei das Koinzidenzdetektionssystem dazu ausgebildet ist, auf Basis eines Modells des Röntgenstrahlendetektors zu arbeiten.

14. Röntgenstrahlendetektorsystem nach einem der Ansprüche 1 bis 13, wobei das Koinzidenzdetektionssystem zum Betrieb auf Basis eines Photonenstreuungsmodells ausgebildet ist, und das Photonenstreuungsmodell auf der Compton-Streuformel, der Klein-Nishina-Formel, dem Lambert-Beer-Gesetz, Querschnitten der Röntgenwechselwirkung für den photoelektrischen Effekt, dem Compton-Effekt und der Rayleigh-Streuung und/oder einer Simulation des Photonentransports beruht.

15. Röntgenstrahlendetektorsystem nach einem der Ansprüche 1 bis 14, wobei das Koinzidenzdetektionssystem zum Betrieb auf Basis eines Photonenstreuungsmodells ausgebildet ist, und das Photonenstreuungsmodell Rayleigh-Streuung einschließt oder alternativ Rayleigh-Streuung ausschließt.

16. Röntgenstrahlendetektorsystem nach einem der Ansprüche 1 bis 15, wobei das Koinzidenzdetektionssystem dazu ausgebildet ist, die in dem gesamten Detektorvolumen oder in einem Teilvolumen des Detektors unabhängig von mindestens einem weiteren Teilvolumen erfassten Photonenwechselwirkungen zu verarbeiten.

17. Röntgenstrahlendetektorsystem nach einem der Ansprüche 1 bis 16, wobei das Koinzidenzdetektionssystem dazu ausgebildet ist, die Informationen über die auftreffende Strahlung auf Basis eines Verfahrens der maximalen Wahrscheinlichkeit, eines maximalen A-posteriori-Verfahrens, eines neuronalen Netzwerks, einer Support-Vektor-Maschine und/oder eines Verfahrens mit einem Entscheidungsbaum zu erhalten und/oder zu bestimmen.

18. Röntgenstrahlendetektorsystem nach einem der Ansprüche 1 bis 17, wobei das Koinzidenzdetektionssystem dazu ausgebildet ist, die Informationen über die auf den Röntgenstrahlendetektor auftreffende Strahlung auf Basis des Zuordnens von mindestens einer Wahrscheinlichkeit zu mindestens einem Satz von Photonenwechselwirkungen zu erhalten und/oder zu bestimmen, wobei die Wahrscheinlichkeit auf der Wahrscheinlichkeit des Beobachtens dieser Photonenwechselwirkungen beruht.

19. Röntgenstrahlendetektorsystem nach einem der Ansprüche 1 bis 18, wobei das Koinzidenzdetektionssystem dazu ausgebildet ist, die Informationen über die auf den Röntgenstrahlendetektor auftreffende Strahlung auf Basis des Optimierens einer Wahrscheinlichkeit zu erhalten und/oder zu bestimmen, wobei die Wahrscheinlichkeit auf der Wahrscheinlichkeit des Beobachtens dieser Photonenwechselwirkungen beruht.

20. Röntgenstrahlendetektorsystem nach einem der Ansprüche 1 bis 19, wobei das Koinzidenzdetektionssystem dazu ausgebildet ist, die Informationen über die auf den Röntgenstrahlendetektor auftreffende Strahlung auf Basis des Zuordnens von mindestens einer Wahrscheinlichkeit zu mindestens einem Satz von Photonenwechselwirkungen zu erhalten und/oder zu bestimmen, wobei die Wahrscheinlichkeit auf der Wahrscheinlichkeit des Beobachtens dieser Photonenwechselwirkungen beruht, falls sie alle von einem einzelnen auftreffenden Photon stammen.

21. Röntgenstrahlendetektorsystem nach einem der Ansprüche 1 bis 20, wobei das Koinzidenzdetektionssystem dazu ausgebildet ist, für jede von mehreren Photonenwechselwirkungen die Wechselwirkung zu einem Satz von Photonenwechselwirkungen auf Basis der mindestens einen Wahrscheinlichkeit des Beobachtens dieser Photonenwechselwirkungen von einem einzelnen auftreffenden Photon zuzuordnen.

22. Röntgenstrahlendetektorsystem nach Anspruch 21, wobei das Koinzidenzdetektionssystem dazu ausgebildet ist, die mehreren Photonenwechselwirkungen zu Sätzen von Photonenwechselwirkungen in solch einer Weise zuzuordnen, dass keine Wechselwirkung zu mehr als einem Satz zugeordnet wird.

23. Röntgenstrahlendetektorsystem nach einem der Ansprüche 20 bis 22, wobei das Koinzidenzdetektionssystem dazu ausgebildet ist, mindestens eine Wechselwirkungsreihenfolge zu den Photonenwechselwirkungen in mindestens einem der Sätze auf Basis einer Wahrscheinlichkeit dieser Wechselwirkungsreihenfolge zuzuordnen.

24. Röntgenstrahlendetektorsystem nach Anspruch 23, wobei das Koinzidenzdetektionssystem dazu ausgebildet ist, eine geschätzte Position des Photonenauftreffens zu mindestens einem Satz von Photonenwechselwirkungen auf Basis der Position der ersten Photonenwechselwirkung in dem Satz zuzuordnen, wie durch mindestens eine Wechselwirkungsreihenfolge angegeben.

25. Röntgenstrahlendetektorsystem nach Anspruch 22 bis 24, wobei das Röntgenstrahlendetektorsystem dazu ausgebildet ist, die Energie von mindestens einem auftreffenden Photon auf Basis der erfassten Energien der Photonenwechselwirkungen innerhalb mindestens eines Satzes von Photonenwechselwirkungen zu schätzen, die wahrscheinlich von einem einzelnen auftreffenden Photon stammen.

26. Röntgenstrahlendetektorsystem nach einem der Ansprüche 20 bis 25, wobei das Röntgenstrahlendetektorsystem dazu ausgebildet ist, die Anzahl der auf den Röntgenstrahlendetektor oder mindestens ein Teilvolumen des Röntgenstrahlendetektors auftreffenden Photonen in mindestens einem Zeitintervall auf Basis der mindestens einen Wahrscheinlichkeit zu schätzen.

27. Röntgenstrahlendetektorsystem nach einem der Ansprüche 18 bis 26, wobei die Wahrscheinlichkeit auf Basis einer vorherigen Wahrscheinlichkeitsverteilung an einem Satz von möglichen, auf den Röntgenstrahlendetektor auftreffenden Spektren berechnet wird.

28. Röntgenstrahlendetektorsystem nach einem der Ansprüche 1 bis 27, wobei das Koinzidenzdetektionssystem dazu ausgebildet ist, auf gemessene Daten vor dem Summieren der gemessenen Zahlen über Zeitintervalle und/oder dem Auslesen derselben aus dem photonenzählenden Röntgenstrahlendetektor angewendet zu werden.

29. Röntgenstrahlendetektorsystem nach einem der Ansprüche 1 bis 28, wobei das Röntgenstrahlendetektorsystem dazu ausgebildet ist, die Informationen über die auf den Röntgenstrahlendetektor auftreffende Strahlung zur Verwendung als Eingangsdaten für einen Bildrekonstruktionsalgorithmus, einen Basismaterial-Zerlegungsalgorithmus, einen Rauschunterdrückungs-Algorithmus, einen Entgratungsalgorithmus, einen Überlagerungskorrektur-Algorithmus und/oder einen Algorithmus zur Korrektur der spektralen Verzerrung auszugeben.

## Revendications

1. Système détecteur de rayons X (5) comprenant :
- un détecteur de rayons X à comptage de photons (20) destiné à détecter le rayonnement X provenant d'une source de rayons X et à enregistrer l'énergie et la position de chacune d'une pluralité d'interactions de photons pour fournir un ensemble de données résultant ; et
- un système de détection de coïncidence (60) configuré pour I) organiser l'ensemble de données résultant en sous-ensembles plus petits, chacun représentant des interactions qui se produisent dans le détecteur pendant une fenêtre temporelle, également appelée instantané, et II) déterminer, pour chaque instantané, des informations concernant le rayonnement incident sur le détecteur de rayons X, y compris au moins un des éléments suivants : nombre de photons incidents dans une zone donnée, distribution spatiale des photons incidents et distribution énergétique des photons incidents, sur la base :
d'informations, pour chacun d'un certain nombre de photons incidents, sur le moment ou le moment des interactions photoniques détectées dans un ensemble d'interactions photoniques susceptibles d'avoir été générées par le photon incident à travers au moins une diffusion Compton dans le détecteur de rayons X, correspondant à une chaîne d'une ou de plusieurs interactions Compton et éventuellement une interaction photoélectrique, en combinaison avec des informations sur les positions des interactions de photons et des informations sur l'énergie déposée dans les interactions photoniques dans ledit détecteur de rayons X et des informations sur l'emplacement de la source de rayons X par rapport au détecteur de rayons X,
ledit système de détection de coïncidence (60) étant configuré pour identifier et coupler, pour chacun desdits photons incidents, des interactions qui appartiennent au même photon incident.

2. Système détecteur de rayons X selon la revendication 1, dans lequel ledit système de détection de coïncidence est configuré pour fonctionner sur la base d'un modèle de diffusion de photons en combinant ledit modèle de diffusion de photons avec lesdites informations concernant l'emplacement de la source de rayons X par rapport au détecteur de rayons X pour déterminer et/ou obtenir lesdites informations concernant le rayonnement.

3. Système détecteur de rayons X selon la revendication 2, dans lequel ledit système de détection de coïncidence est configuré pour combiner ledit modèle de diffusion de photons et une connaissance préalable de l'emplacement de la source de rayons X avec une connaissance préalable de la probabilité de différentes distributions d'énergie de rayons X incidents pour déterminer et/ou obtenir ladite information concernant le rayonnement.

4. Système détecteur de rayons X selon l'une quelconque des revendications 1 à 3, dans lequel ledit détecteur de rayons X est un détecteur de rayons X à plusieurs bacs à comptage de photons capable de discriminer entre différentes énergies d'interaction de photons, et le système de détection de coïncidence est configuré pour utiliser des informations sur les énergies d'interaction de photons pour déterminer lesdites informations concernant le rayonnement.

5. Système détecteur de rayons X selon l'une quelconque des revendications 1 à 4, dans lequel ledit système de détection de coïncidence est configuré pour déterminer et/ou obtenir lesdites informations concernant le rayonnement sur la base d'une mesure du temps et/ou de la synchronisation des interactions de photons.

6. Système détecteur de rayons X selon l'une quelconque des revendications 1 à 5, dans lequel ledit système de détection de coïncidence est configuré pour déterminer et/ou obtenir lesdites informations concernant le rayonnement incident sur le détecteur sur la base de l'identification d'au moins un ensemble d'interactions de photons pouvant être générées par un photon incident unique.

7. Système détecteur de rayons X selon la revendication 6, dans lequel ledit système de détection de coïncidence est configuré pour générer et/ou obtenir des informations concernant le rayonnement incident sur le détecteur de rayons X sur la base de l'identification d'au moins deux ensembles d'interactions de photons susceptibles d'avoir été générés par au moins deux photons incidents différents, toutes les interactions de photons dans chaque ensemble étant susceptibles d'avoir été générées par un seul photon incident, et ledit système de détection de coïncidence est configuré pour identifier lesdits au moins deux ensembles d'interactions de photons comme étant susceptibles d'avoir été générés par au moins deux photons incidents différents sur la base de la comparaison de ces ensembles d'interactions de photons avec au moins un autre ensemble possible d'interactions de photons.

8. Système détecteur de rayons X selon l'une quelconque des revendications 1 à 7, dans lequel ledit système de détection de coïncidence est configuré pour générer et/ou obtenir des informations concernant le rayonnement incident sur le détecteur de rayons X sur la base desdites informations concernant le temps des interactions de photons en combinaison avec au moins un angle défini par au moins deux positions d'interaction photonique et/ou sur la base d'au moins un angle défini par trois positions d'interaction photonique et/ou sur la base d'au moins un angle défini par la direction du rayonnement incident et deux positions d'interaction photonique.

9. Système détecteur de rayons X selon l'une quelconque des revendications 1 à 8, dans lequel ledit détecteur de rayons X est un détecteur au silicium.

10. Système détecteur de rayons X selon la revendication 9, le système détecteur de rayons X étant configuré pour discriminer entre des interactions Compton et photoélectriques sur la base d'un seuil d'énergie.

11. Système détecteur de rayons X selon l'une quelconque des revendications 1 à 10, le système détecteur de rayons X comportant des bloqueurs à atténuation élevée pour réduire la diffusion à l'intérieur du détecteur de rayons X.

12. Système détecteur de rayons X selon l'une quelconque des revendications 1 à 11, le système détecteur de rayons X étant configuré pour employer une logique pour estimer la position d'interaction sur la base d'une estimation de la quantité de diffusion de charge.

13. Système détecteur de rayons X selon l'une quelconque des revendications 1 à 12, ledit système de détection de coïncidence étant configuré pour fonctionner sur la base d'un modèle du détecteur de rayons X.

14. Système détecteur de rayons X selon l'une quelconque des revendications 1 à 13, dans lequel ledit système de détection de coïncidence est configuré pour fonctionner sur la base d'un modèle de diffusion de photons et ledit modèle de diffusion de photons est basé sur au moins l'une de la formule de diffusion de Compton, de la formule de Klein-Nishina, de la loi de Lambert-Beer, des sections transversales d'interaction de rayons X pour l'effet photoélectrique, l'effet Compton ou la diffusion de Rayleigh, et une simulation du transport de photons.

15. Système détecteur de rayons X selon l'une quelconque des revendications 1 à 14, dans lequel ledit système de détection de coïncidence est configuré pour fonctionner sur la base d'un modèle de diffusion de photons et ledit modèle de diffusion de photons comprend une diffusion de Rayleigh, ou en variante exclut une diffusion de Rayleigh.

16. Système détecteur de rayons X selon l'une quelconque des revendications 1 à 15, dans lequel ledit système de détection de coïncidence est configuré pour traiter les interactions de photons détectées dans le volume entier du détecteur ou dans un sous-volume du détecteur indépendamment d'au moins un autre sous-volume.

17. Système détecteur de rayons X selon l'une quelconque des revendications 1 à 16, dans lequel ledit système de détection de coïncidence est configuré pour obtenir et/ou déterminer lesdites informations concernant le rayonnement incident sur la base d'au moins un procédé parmi un procédé de probabilité maximale, un procédé de maximum a posteriori, un réseau neuronal, une machine à vecteur de support ou un procédé basé sur un arbre de décision.

18. Système détecteur de rayons X selon l'une quelconque des revendications 1 à 17, dans lequel ledit système de détection de coïncidence est configuré pour obtenir et/ou déterminer lesdites informations concernant le rayonnement incident sur le détecteur de rayons X sur la base de l'attribution d'au moins une probabilité à au moins un ensemble d'interactions de photons, ladite probabilité étant basée sur la probabilité d'observer ces interactions de photons.

19. Système détecteur de rayons X selon l'une quelconque des revendications 1 à 18, dans lequel ledit système de détection de coïncidence est configuré pour obtenir et/ou déterminer lesdites informations concernant le rayonnement incident sur le détecteur de rayons X sur la base de l'optimisation d'une probabilité, ladite probabilité étant basée sur la probabilité d'observer ces interactions de photons.

20. Système détecteur de rayons X selon l'une quelconque des revendications 1 à 19, dans lequel ledit système de détection de coïncidence est configuré pour obtenir et/ou déterminer lesdites informations concernant le rayonnement incident sur le détecteur de rayons X sur la base de l'attribution d'au moins une probabilité à au moins un ensemble d'interactions de photons, ladite probabilité étant basée sur la probabilité d'observer ces interactions de photons si elles proviennent toutes d'un photon incident unique.

21. Système détecteur de rayons X selon l'une quelconque des revendications 1 à 20, dans lequel ledit système de détection de coïncidence est configuré pour affecter, pour chacune d'une pluralité d'interactions de photons, l'interaction à un ensemble d'interactions de photons sur la base de ladite au moins une probabilité d'observer ces interactions de photons à partir d'un seul photon incident.

22. Système détecteur de rayons X selon la revendication 21, dans lequel ledit système de détection de coïncidence est configuré pour affecter ladite pluralité d'interactions de photons à des ensembles d'interactions de photons de telle sorte qu'aucune interaction ne soit affectée à plus d'un ensemble.

23. Système détecteur de rayons X selon l'une quelconque des revendications 20 à 22, dans lequel ledit système de détection de coïncidence est configuré pour attribuer au moins un ordre d'interaction aux interactions de photons dans au moins un desdits ensembles sur la base d'une probabilité de cet ordre d'interaction.

24. Système détecteur de rayons X selon la revendication 23, dans lequel ledit système de détection de coïncidence est configuré pour affecter une position estimée d'incidence de photons à au moins un ensemble d'interactions de photons sur la base de la position de la première interaction de photons dans l'ensemble comme spécifié par au moins un ordre d'interaction.

25. Système détecteur de rayons X selon les revendications 22 à 24, ledit système détecteur de rayons X étant configuré pour estimer l'énergie d'au moins un photon incident sur la base d'énergies détectées d'interactions de photons dans au moins un ensemble d'interactions de photons susceptibles de provenir d'un photon incident unique.

26. Système détecteur de rayons X selon l'une quelconque des revendications 20 à 25, dans lequel ledit système détecteur de rayons X est configuré pour estimer le nombre de photons incidents sur le détecteur de rayons X ou au moins un sous-volume du détecteur de rayons X dans au moins un intervalle temporel sur la base de ladite au moins une probabilité.

27. Système détecteur de rayons X selon l'une quelconque des revendications 18 à 26, dans lequel ladite probabilité est calculée sur la base d'une distribution de probabilité antérieure sur un ensemble de spectres possibles incidents sur le détecteur de rayons X.

28. Système détecteur de rayons X selon l'une quelconque des revendications 1 à 27, dans lequel ledit système de détection de coïncidence est configuré pour être appliqué à des données mesurées avant au moins l'une des étapes consistant à additionner des comptages mesurés sur des intervalles temporels et à les lire à partir du détecteur de rayons X à comptage de photons.

29. Système détecteur de rayons X selon l'une quelconque des revendications 1 à 28, dans lequel ledit système détecteur de rayons X est configuré pour délivrer lesdites informations concernant le rayonnement incident sur le détecteur de rayons X pour une utilisation en tant que données d'entrée pour au moins l'un d'un algorithme de reconstruction d'image, d'un algorithme de décomposition de matériau de base, d'un algorithme de débruitage, d'un algorithme de correction d'empilement ou d'un algorithme de correction de distorsion spectrale.
